# EUROPÄISCHE PATENTSCHRIFT

(11) **EP 1 594 325 B1**
(45) Veröffentlichungstag und Bekanntmachung des Hinweises auf die Patenterteilung: **15.04.2015**
(21) Anmeldenummer: 05016522.4
(22) Anmeldetag: 14.06.1999
(51) Int. Cl.: H04L 12/58, H04W 4/14, H04W 4/18

(54) **Verfahren zur Übertragung von Kurznachrichten**
Method for transmitting short messages
Procédé de transmission de messages courts

(30) Priorität: 08.12.1998 DE 19856441
(43) Veröffentlichungstag der Anmeldung: 09.11.2005
(62) Teilanmeldung aus: 03014967.8
(73) Patentinhaber: IPCom GmbH & Co. KG, 82049 Pullach (DE)
(72) Erfinder: Fischer, Ralf, 31162 Bad Sazdetfurth (DE); Hans, Martin, 31139 Hildesheim (DE); Kowalewski, Frank, 38228 Salzgitter (DE); Schulz, Holger, 14059 Berlin (DE); Schmidt, Gunnar, 38302 Wolfenbuettel (DE)
(74) Vertreter: Gigerich, Jan

(56) Entgegenhaltungen:
- EP-A- 0 689 368
- EP-A- 0 777 394
- WO-A-97/08906
- WO-A-98/03005
- WO-A-98/32089
- DATABASE INTERNET The University of Washington ,; Internet RFC 2060 (IMAP) Dezember 1996 (1996-12), M. CRISPIN: "Internet Message Access Protocol - version 4rev1 ," XP002122132
- "Pine Release Chronology & Version Changes, Changes from Pine 4.03 to 4.04" PINE INFORMATION CENTER, [Online] 23. September 1998 (1998-09-23), Seite 1, XP002345351 University of Washington Gefunden im Internet: URL:http://www.washington.edu/pine/changes /4.03-to-4.04.html> [gefunden am 2005-09-16]
- "Pine FAQs: FAQ Topics, 7. Attachments to e-mail messages" PINE INFORMATION CENTER, [Online] 29. Januar 2002 (2002-01-29), Seiten 1-4, XP002345368 University of Washington Gefunden im Internet: URL:http://www.washington.edu/pine/faq/att achments.html#top> [gefunden am 2005-09-16]
- BOSCH: "Generalised Structure for a Multimedia Messaging Service", ETSI STC SMG1+SMG4+SMG12 MULTIMEDIATDOC, XX, XX, no. 43/98, 3 December 1998 (1998-12-03), XP002431202,

## Beschreibung

### Stand der Technik

Die Erfindung geht von einem Verfahren zur Übertragung von Kurznachrichten nach der Gattung des Hauptanspruchs aus.

Es sind bereits Kurznachrichtendienste bekannt, die dazu dienen, einem Teilnehmer eines Telekommunikationsnetzes eine Kurznachricht zu senden, ohne dass vorher eine Telekommunikationsverbindung zu diesem Teilnehmer aufgebaut werden muss. Dies ist besonders in Mobilfunksystemen von Bedeutung, da dort Teilnehmer oftmals nicht erreichbar sind. Dabei werden für den Teilnehmer eingehende Kurznachrichten von einem Netzbetreiber des Telekommunikationsnetzes gespeichert und zu einem späteren Zeitpunkt an diesen Teilnehmer übermittelt. Dazu wird der Teilnehmer vom Eintreffen einer für ihn bestimmten Kurznachricht informiert, so dass er diese dann vom Netzbetreiber herunterladen kann.

Im Dokument "ETSI STC SMGI + SMG4 + SMG12 MULTIMEDIA Tdoc multimedia 043/98, Hanover, Germany, 2-3 December 1998", title: generalized structure for a multimedia messaging service ist eine Struktur für den Multimedia messaging-Dienst MMS beschrieben. Der MMS-Dienst soll den Grundprinzipien der "store-and-forward"-Übertragungen folgen. Weiterhin ist es vorteilhaft, alle Dienste, wie zum Beispiel SMS, FAX, Sprach-, Audio-, Bild-, Videomails, in eine einzige verallgemeinerte Struktur in Form eines "multimedia-Containers" (MMC) zu kombinieren. Dieser Container trägt eine beliebige Kombination von verschiedenen Mediendaten zusammen mit einer eingebetteten und dem Inhalt zugeordneten Information (CAI), die zum Beispiel den Typ, die Größe, die Fähigkeiten usw. ihrer Nutzlast identifizieren. Dazu sollte der MMS nicht ein einfacher mail-Dienst sein, er sollte darüber hinaus ein neues Element sein, das schon etablierte und neue Nichtechtzeitdienste abdeckt. Um einen universellen Benachrichtigungsmechanismus zu ermöglichen, wird das MMS-Präfix mit den Informationen, die die Nachrichtentypen, Länge usw. betreffen, zum Endgerät geliefert.

Aus der WO 97/08906 ist ein Verfahren zur Übertragung E-Mail-Nachrichten in einem Telekommunikationsnetz, insbesondere in einem Funktelekommunikationsnetz beschrieben, wobei eine Mitteilung in Form einer Kurznachricht (Short Message Service SMS) an einen Teilnehmer des Telekommunikationsnetzes in Abhängigkeit einer für den Teilnehmer an das Telekommunikationsnetz abgesetzten E-Mail-Nachricht vom Internet gesendet wird, wobei mit der Mitteilung in Form einer Kurznachricht Daten zum Teilnehmer übertragen werden, die Informationen über den Aufbau und/oder den Inhalt der E-Mail-Nachricht umfassen.

Als Kurznachrichtendienst gemäß dem GSM-Standard (Global System for Mobile Communications) ist der SMS (Short Message Service) bekannt. Dabei können in einer Kurznachricht bis zu 160 7-Bit ASCII-Textzeichen (American Standard Code for Information Interchange) übertragen werden. Die Übertragung von längeren Texten ist mit Hilfe von verketteten Kurznachrichten möglich. Da nur eine Textübertragung gemäß dem GSM-Standard vorgesehen ist, müssen bei der Übertragung von binären Daten wie beispielsweise Audiodaten, Bilddaten, oder dergleichen diese in das Textformat umgewandelt und nach dem Empfang wieder in das Binärformat zurückgewandelt werden. Dabei ist nur der Zugriff auf den gesamten Inhalt einer Kurznachricht möglich. Dadurch werden gegebenenfalls auch vom adressierten Teilnehmer nicht gewollte Daten der Kurznachricht zu ihm übertragen. Einen Überblick über den Inhalt der Kurznachricht bekommt er erst nach dem Herunterladen der vollständigen Kurznachricht vom Netzbetreiber.

### Vorteile der Erfindung

Das erfindungsgemäße Verfahren zur Übertragung von Kurznachrichten mit den Merkmalen des Hauptanspruchs hat demgegenüber den Vorteil, dass eine Mitteilung an einen Teilnehmer des Telekommunikationsnetzes in Abhängigkeit einer für den Teilnehmer an das Telekommunikationsnetz abgesetzten Kurznachricht gesendet wird, wobei mit der Mitteilung Daten zum Teilnehmer übertragen werden, die Informationen über den Aufbau und/oder den Inhalt der Kurznachricht umfassen. Auf diese Weise erfährt der Teilnehmer nicht nur, dass eine Kurznachricht für ihn beim Netzbetreiber eingegangen ist. Vielmehr erhält er weitere Informationen über die Kurznachricht, die eine Entscheidung darüber ermöglichen, ob die gesamte Kurznachricht oder nur Teile der Kurznachricht vom Netzbetreiber heruntergeladen werden sollen. Somit kann der Teilnehmer einfach und komfortabel auf Inhalte von Kurznachrichten zugreifen.

Darüber hinaus kann vom Teilnehmer mittels einer an das Telekommunikationsnetz abgesetzten Auswahlnachricht mindestens ein Teil der Kurznachricht vom Telekommunikationsnetz angefordert wird und dass der mindestens eine angeforderte Teil der Kurznachricht zum Teilnehmer übertragen wird. Somit muss nicht die gesamte Kurznachricht vom Netzbetreiber heruntergeladen werden, sondern nur der vom Teilnehmer gewünschte Teil. Dies ist mittels der Auswahlnachricht besonders einfach möglich und führt zur Einsparung von Übertragungskapazität.

Des Weiteren kann vom Teilnehmer eine Löschungsnachricht an das Telekommunikationsnetz abgesetzt wird und dass in Abhängigkeit der Löschungsnachricht mindestens ein Teil der Kurznachricht gelöscht wird. Auf diese Weise kann der Teilnehmer auch eine selektive Löschung Teilen der Kurznachricht bewirken, so dass von ihm nicht lesbare oder nicht gewünschte Teile der Kurznachricht gelöscht werden können und nicht unnötig Speicherplatz beim Netzbetreiber beanspruchen.

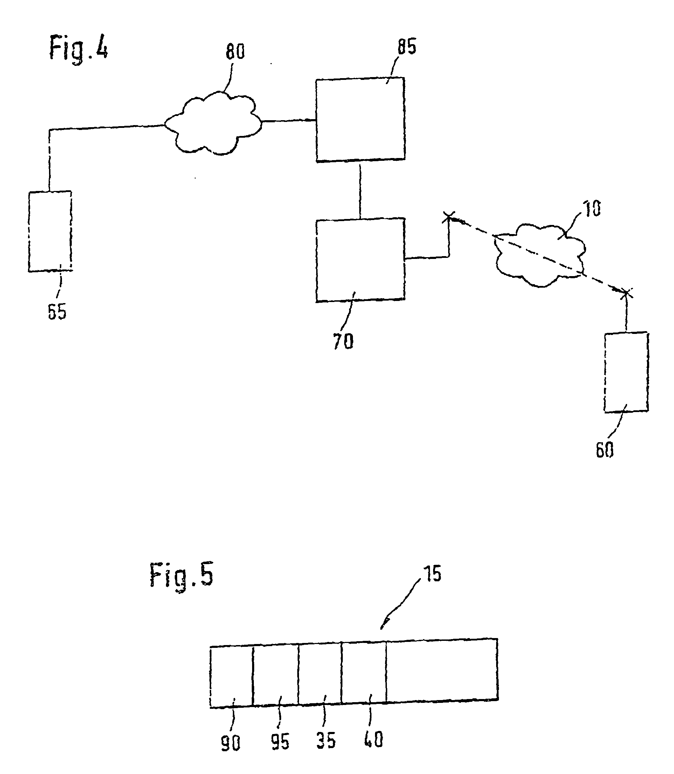

Es kann auch wie in Figur 5 dargestellt vorgesehen sein, eine zweite Kopfinformation 95 in der Mitteilung vorzusehen Die erste Kopfinformation 90 enthält dann lediglich eine Information über das Vorhandensein der zweiten Kopfinformation 95, beispielsweise in Form eines gesetzten Bits. Die zweite Kopfinformation 95 enthält dann Informationen über die Art der durchzuführenden Auswertung der Mitteilung. Die durchzuführende Auswertung kann dabei darin bestehen, die Mitteilung lediglich in Textform an der Anzeigevorrichtung darzustellen. Handelt es sich bei der Mitteilung um Informationen über den Aufbau und/oder den Inhalt der Kurznachricht 5, so kann die zweite Kopfinformation 95 auch eine menügesteuerte Anzeige, insbesondere mit Verzeichnisstruktur, dieser Informationen für die durchzuführende Auswertung vorgeben. Die zweite Kopfinformation 95 ist somit besonders dann erforderlich, wenn zwischen mehreren auf der Auswerteeinheit beziehungsweise -vorrichtung implementierten Auswertemöglichkeiten der Informationen über den Aufbau und/oder den Inhalt der Kurznachricht 5 gewählt werden kann.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn als Mitteilung ein textbasierter erster Teil der Kurznachricht der die Daten mit den Informationen über den Aufbau und/oder den Inhalt der Kurznachricht umfasst, zum Teilnehmer übertragen wird. Auf diese Weise wird sichergestellt, dass die Mitteilung von möglichst vielen Teilnehmern des Telekommunikationsnetzes lesbar ist, die bereits zum Empfang von textbasierten Kurznachrichten ausgelegt sind. Dies gilt besonders für nach dem GSM-Standard (Global System for Mobile Communications) ausgebildete Mobilfunkgeräte als Teilnehmer eines GSM-Mobilfunknetzes, die zum Empfang und zur Darstellung von textbasierten Kurznachrichten nach dem SMS-Kurznachrichtendienst (Short Message Service) ausgelegt sind. Beim Teilnehmer kann somit anhand der textbasierten Mitteilung festgestellt werden, ob beim Netzbetreiber vorliegende Kurznachrichten überhaupt von ihm lesbar sind, bzw. welche Teile solcher Kurznachrichten von ihm lesbar sind. Bei den Teilnehmern können dann nur die lesbaren Teile der für sie beim Netzbetreiber vorliegenden Kurznachrichten zum Herunterladen ausgewählt werden. Somit wird Übertragungskapazität eingespart.

Ein weiterer Vorteil besteht darin, dass mit den Informationen über den Aufbau und/oder den Inhalt der Kurznachricht Angaben über den Absender der in der Kurznachricht gespeicherten Daten zum Teilnehmer übertragen werden. Somit erhält der Teilnehmer ein weiteres Kriterium für eine Entscheidung zum Herunterladen der beim Netzbetreiber vorliegenden Kurznachricht.

Ein weiterer Vorteil besteht darin, dass die Informationen über den Aufbau und/oder den Inhalt der Kurznachricht beim Teilnehmer aus der empfangenen Mitteilung ausgelesen und an einer Anzeigevorrichtung dargestellt werden. Auf diese Weise kann der Benutzer oder Teilnehmer selbst den Aufbau und/oder den Inhalt der Kurznachricht auswerten und einen oder mehrere Teile der Kurznachricht besonders komfortabel für eine Weiterverarbeitung auswählen.

Vorteilhaft ist auch, dass die Informationen über den Aufbau und/oder den Inhalt der Kurznachricht direkt in einer Teilnehmerstation des Teilnehmers verarbeitet werden. Auf diese Weise ist eine netzbetreiberunabhängige Verarbeitung möglich, wenn zur Verarbeitung nur Module der Teilnehmerstation, nicht jedoch ein Modul des Netzbetreibers, beispielsweise ein Identifikationsmodul, insbesondere eine SIM-Karte (Subscriber Identitiy Module), verwendet werden.

Vorteilhaft ist jedoch auch eine von der Teilnehmerstation unabhängige Verarbeitung der Informationen über den Aufbau und/oder den Inhalt der Kurznachricht mittels eines Identifikationsmoduls, das beispielsweise vom Netzbetreiber zur Verfügung gestellt wird. Die Mitteilung kann dann unabhängig vom Typ der-Teilnehmerstation ausgewertet werden wodurch eine hohe Kompatibilität bei gleichzeitiger Vielfalt von Teilnehmerstationen bezüglich deren Funktionalität und Verarbeitungsmodule erreicht werden kann.

Ein weiterer Vorteil besteht darin, dass mit der Mitteilung eine erste Kopfinformation und eine Nachricht zum Teilnehmer übertragen werden, wobei die erste Kopfinformation zumindest eine Information über den Inhalt der Nachricht und die Nachricht die Informationen über den Aufbau und/oder den Inhalt der Kurznachricht umfasst. Auf diese Weise lässt sich die Art der Weiterverarbeitung der Nachricht in der Teilnehmerstation beziehungsweise durch das Identifikationsmodul steuern, so dass die Informationen über den Aufbau und/oder den Inhalt der Kurznachricht als solche erkannt und in angemessener Weise verarbeitet werden können.

Ein weiterer Vorteil besteht darin, dass mit der Nachricht eine zweite Kopfinformation und Nutzdaten zum Teilnehmer übertragen werden, wobei die erste Kopfinformation eine Information über das Vorhandensein der zweiten Kopfinformation und die zweite Kopfinformation mindestens eine Information über die Art der durchzuführenden Auswertung der Mitteilung umfasst. Auf diese Weise ist eine differenziertere Steuerung der Weiterverarbeitung der Nachricht möglich.

Vorteilhaft ist auch, dass als Kurznachricht eine Nachricht eines elektronischen Postdienstes, insbesondere eine Internet E-Mail Nachricht, an das Telekommunikationsnetz abgesetzt wird. Auf diese Weise lässt sich der Zugriff auf Nachrichten eines elektronischen Postdienstes auch besonders einfach und komfortabel in einem Telekommunikationsnetz realisieren.

Ein Vorteil besteht auch darin, daß die Mitteilung als SMS-Nachricht (Short Message Service) gemäß dem GSM-Standard (Global System for Mobile Communications) an den Teilnehmer übertragen wird. Auf diese Weise wird für alle GSM-Endgeräte, die den SMS-Dienst unterstützen, die Möglichkeit geschaffen, über die Mitteilung zumindest Kenntnis über die vorliegende Kurznachricht hinsichtlich ihres Aufbaus und/oder Inhalts zu erlangen, da alle diese Endgeräte in der Lage sind, solche SMS-Nachrichten zu empfangen und wiederzugeben. Somit wird eine hohe Kompatibilität für den Empfang der Mitteilung bei SMS-fähigen Teilnehmerstationen unterschiedlicher Funktionalität erreicht.

Vorteilhaft ist es auch, daß die Quittierungsnachricht in Form einer Kurznachricht für den Sender an das Telekommunikationsnetz abgesetzt wird, wobei eine Mitteilung an den Sender in Abhängigkeit der Quittierungsnachricht gesendet wird und mit der Mitteilung Daten zum Sender übertragen werden, die Informationen über den Aufbau und/oder den Inhalt der Quittierungsnachricht umfassen. Die Kurznachricht und die zugehörige Mitteilung nach Anspruch 1 lassen sich somit in vielfältiger Weise einsetzen, so daß eine einheitliche Nachrichtenversendung im Telekommunikationsnetz gewährleistet werden kann.

Ein Vorteil besteht auch darin, daß die Quittierungsnachricht als SMS-Nachricht gemäß dem GSM-Standard und die Mitteilung als erste Kopfinformation und/oder zweite Kopfinformation für den Sender an das Telekommunikationsnetz abgesetzt werden. Auch dadurch wird eine Lesbarkeit der Quittierungsnachricht bei allen SMS-fähigen Sendern gewährleistet.

Vorteilhaft ist auch, daß vom Teilnehmer mittels einer an das Telekommunikationsnetz abgesetzten Befehlsnachricht mindestens ein Datenfeld der Kurznachricht in Abhängigkeit des Inhalts der Befehlsnachricht verarbeitet wird. Auf diese Weise ermöglicht die Mitteilung über die Kurznachricht nicht nur eine Information über die Kurznachricht, sondern ermöglicht auch deren ferngesteuerte Verarbeitung durch den Teilnehmer.

Ein besonderer Vorteil besteht darin ,daß die Befehlsnachricht beim Teilnehmer in Abhängigkeit der Informationen über den Aufbau und/oder den Inhalt der Kurznachricht automatisch erstellt wird. Auf diese Weise wird der Komfort für den Benutzer beziehungsweise Teilnehmer erheblich erhöht.

Besonders vorteilhaft ist auch, daß die Befehlsnachricht in Abhängigkeit des Leistungsumfangs einer dem Teilnehmer zugeordneten Teilnehmerstation und/oder in Abhängigkeit von vom Teilnehmer vorgegebenen Befehlskriterien erstellt wird. Auf diese Weise wird die ferngesteuerte Verarbeitung der Kurznachricht automatisch an die Möglichkeiten der Teilnehmerstation oder den Bedürfnissen des Benutzers beziehungsweise des Teilnehmers angepaßt, was beispielsweise beim Laden eines oder mehrerer Teile der Kurznachricht in die Teilnehmerstation und beim Löschen oder Weiterleiten von von der Teilnehmerstation nicht lesbaren oder nicht gewünschten Teilen der Kurznachricht von Bedeutung ist.

Ein Vorteil besteht auch darin, daß die Befehlsnachricht in Form einer Kurznachricht für eine Zentralstation, insbesondere eines Netzbetreibers, an das Telekommunikationsnetz abgesetzt wird, wobei eine Mitteilung an die Zentralstation in Abhängigkeit der Befehlsnachricht gesendet wird und mit der Mitteilung Daten zur Zentralstation übertragen werden, die Informationen über den Aufbau und/oder den Inhalt der Befehlsnachricht umfassen. Auf diese Weise wird auch für das Versenden von Befehlen im Telekommunikationsnetz die Form der Kurznachricht und der dazugehörigen Mitteilung gemäß Anspruch 1 verwendet, so daß im Telekommunikationsnetz Einheitlichkeit für die Versendung verschiedener Arten von Informationen, wie Befehlen, Quittierungen und reinen Postdiensten bezüglich des Prinzips einer initial versendeten Mitteilung über eine entsprechend im Telekommunikationsnetz vorliegende Kurznachricht gemäß Anspruch 1 erzielt wird und einheitliche Prinzipien für die Auswertung der Kurznachricht anhand der initial versendeten Mitteilung zur Verfügung gestellt werden können.

Vorteilhaft ist auch, daß die Befehlsnachricht und die Mitteilung direkt in einer Teilnehmerstation des Teilnehmers erstellt werden. Auf diese Weise kann eine netzbetreiberunabhängige Erstellung der Befehlsnachricht allein mittels Modulen der Teilnehmerstation ohne Module des Netzbetreibers, wie beispielsweise eines Identifikationsmoduls, realisiert werden.

Eine von Modulen der Teilnehmerstation unabhängige Erstellung der Befehlsnachricht und der Mitteilung ist hingegen mittels eines Identifikationsmoduls möglich, das beispielsweise vom Netzbetreiber zur Verfügung gestellt wird. Die Befehlsnachricht kann dann unabhängig vom Typ der Teilnehmerstation erstellt werden, wodurch eine hohe Kompatibilität bei gleichzeitiger Vielfalt von Teilnehmerstationen bezüglich deren Funktionalität und Verarbeitungsmodule erreicht werden kann.

Vorteilhaft ist auch, daß die Befehlsnachricht als SMS-Nachricht gemäß dem GSM-Standard und die Mitteilung als erste Kopfinformation und/oder zweite Kopfinformation für die Zentralstation an das Telekommunikationsnetz abgesetzt werden. Dadurch wird eine Lesbarkeit der Befehlsnachricht bei jeder SMS-fähigen Zentralstation gewährleistet.

Ein weiterer Vorteil besteht darin, daß die Informationen über den Aufbau und/oder den Inhalt der Kurznachricht aus Angaben über den Aufbau und/oder den Inhalt mindestens zweier Teile der Kurznachricht generiert werden, wobei die Angaben aus diesen Teilen erhalten werden. Auf diese Weise muß der erste Teil der Kurznachricht nicht mit Informationen über den Aufbau und/oder den Inhalt der gesamten Kurznachricht versehen sein, so daß er besser für die Übertragung der entsprechenden Kurznachricht selbst genutzt werden kann.

### Zeichnung

Ausführungsbeispiele der Erfindung sind in der Zeichnung dargestellt und in der nachfolgenden Beschreibung näher erläutert. Es zeigen Figur 1 ein erstes Blockschaltbild für die Übertragung von Kurznachrichten in einem Telekommunikationsnetz, Figur 2 einen allgemeinen Aufbau eines Übertragungsrahmens, Figur 3 ein konkretes Beispiel für einen Aufbau eines Übertragungsrahmens, Figur 4 ein zweites Blockschaltbild für die Übertragung von Kurznachrichten in einem Telekommunikationsnetz und Figur 5 den Aufbau einer Mitteilung mit Informationen über den Aufbau und/oder den Inhalt einer Kurznachricht.

### Beschreibung des Ausführungsbeispiels

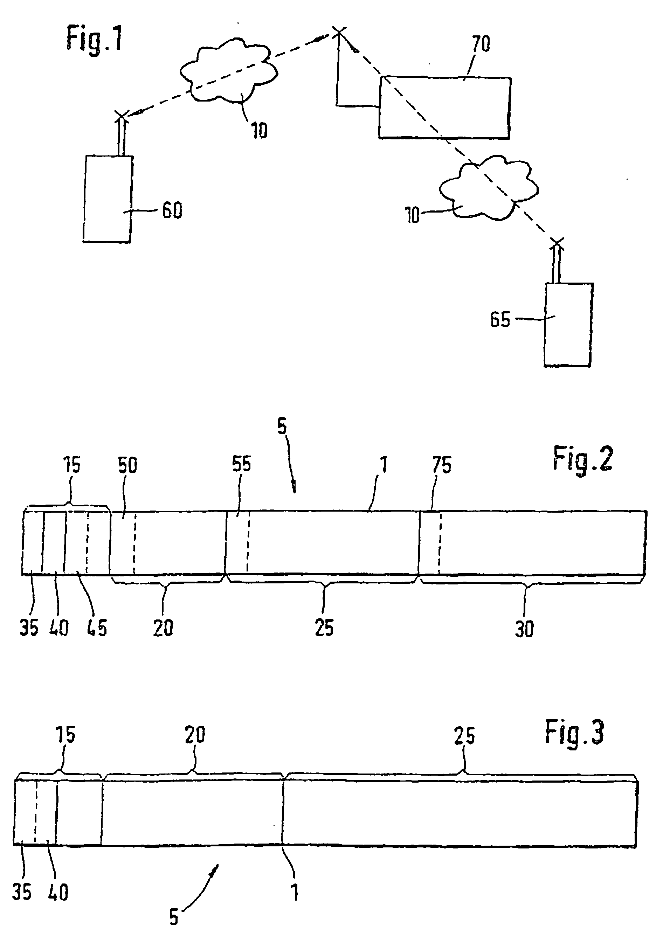

In Figur 1 kennzeichnet 60 einen ersten Teilnehmer und 65 einen zweiten Teilnehmer eines Telekommunikationsnetzes 10, das insbesondere als Funktelekommunikationsnetz, beispielsweise als Mobilfunknetz ausgebildet ist. Der erste Teilnehmer 60 und der zweite Teilnehmer 65 sind jeweils als Telekommunikationsgerät oder Teilnehmerstation, insbesondere als Funkeinheit, beispielsweise als Mobilfunkgerät, als Betriebsfunkgerät, als Handfunkgerät, oder dergleichen ausgebildet. In Figur 1 ist außerdem ein Keizbetreiber 70 des Telekommunikationsnetzes 10 dargestellt, der ebenfalls als Telekommunikationsgerät, insbesondere als Funkeinheit ausgebildet und als Zentralstation bezeichnet werden kann. Die Zentralstation kann dabei auch einem vom Netzbetreiber verschiedenen externen Diensteanbieter zugeordnet sein. Im folgenden soll sie beispielhaft jedoch dem Netzbetreiber 70 zugeordnet sein.

In einem ersten Ausführungsbeispiel wird gemäß Figur 1 beim zweiten Teilnehmer 65 eine Kurznachricht 5 für den ersten Teilnehmer 60 erstellt und mit entsprechender Adressierung über das Telekommunikationsnetz 10 an den Netzbetreiber 70 abgestrahlt.

In einem zweiten Ausführungsbeispiel gemäß Figur 4 kennzeichnen gleiche Bezugszeichen gleiche Elemente. Im Unterschied zum ersten Ausführungsbeispiel ist der zweite Teilnehmer 65 nicht über das Telekommunikationsnetz 10 sondern über ein Datennetz 80, das beispielsweise als Internet ausgebildet sein kann, und eine Netzanschlußeinheit 85 mit dem Netzbetreiber 70 verbunden. Die beim zweiten Teilnehmer 65 erstellte Kurznachricht wird dabei beispielsweise als elektronische Post, beispielsweise als E-Mail, über das Datennetz 80 und die Netzanschlußeinheit 85 mit entsprechender Adressierung an den Netzbetreiber 70 versendet.

Bei beiden Ausführungsbeispielen speichert der Netzbetreiber 70 die Kurznachricht 5 und sendet dem ersten Teilnehmer 60 eine Nachricht zu, wonach dieser über das Vorliegen einer an ihn adressierten Kurznachricht 5 informiert wird. Diese Nachricht kann dem ersten Teilnehmer 60 beispielsweise zugesandt werden, wenn der Netzbetreiber 70 eine Aktivierung des ersten Teilnehmers 60 feststellt. Fordert der erste Teilnehmer 60 nach Empfang der genannten Nachricht den Netzbetreiber 70 zur Übertragung der Kurznachricht 5 auf, so sendet der Netzbetreiber 70 an den ersten Teilnehmer 60 zunächst eine Mitteilung, die den ersten Teilnehmer 60 über Aufbau und/oder Inhalt der Kurznachricht 5 informiert. Dieser Mechanismus wird auch als Poll-Service bezeichnet. Der erste Teilnehmer 60 kann anschließend die Kurznachricht 5 teilweise oder vollständig vom Netzbetreiber 70 herunterladen, so daß die Kurznachricht 5 teilweise oder vollständig vom Netzbetreiber 70 zum ersten Teilnehmer 60 übertragen wird.

Es kann jedoch auch vorgesehen sein, daß die Mitteilung ohne vorheriges Absenden einer Nachricht umgehend an den ersten Teilnehmer 60 versendet wird beziehungsweise sobald eine Aktivierung des ersten Teilnehmers 60 festgestellt wird. Dieser Mechanismus wird als Push-Service bezeichnet.

Beim Netzbetreiber 70 kann für den ersten Teilnehmer 60 festgelegt sein, ob der Push- oder der Poll-Mechanismus angewendet werden soll.

In Figur 2 ist der Aufbau einer solchen Kurznachricht 5 dargestellt. Die Kurznachricht 5 wird dabei in einem Übertragungsrahmen 1 vom zweiten Teilnehmer 65 zum Netzbetreiber 70 übertragen. Der Übertragungsrahmen 1 umfaßt ein erstes Datenfeld 15, ein zweites Datenfeld 20, gegebenenfalls ein drittes Datenfeld 25 und ein viertes Datenfeld 30. Das erste Datenfeld 15 umfaßt eine erste Kennung 35, die den Aufbau der Kurznachricht 5 kennzeichnet. Zusätzlich kann im ersten Datenfeld 15 eine zweite Kennung 40 vorgesehen sein, die den Inhalt der Kurznachricht 5 kennzeichnet. Die erste Kennung 35 und die zweite Kennung 40 können auch zu einer einzigen Kennung zusammengefaßt sein, die den Aufbau und/oder den Inhalt der Kurznachricht 5 kennzeichnet. Im ersten Datenfeld 15 sind außerdem Daten eines ersten Datenformats abgelegt. Im zweiten Datenfeld 20 sind Daten eines vom ersten Datenformat verschiedenen zweiten Datenformats abgelegt. In den gegebenenfalls vorhandenen weiteren. Datenfelder 25, 30 sind ebenfalls Daten abgelegt, deren Datenformat vom Datenformat des ersten Datenfeldes 15 oder des zweiten Datenfeldes 20 verschieden sein kann, aber nicht muß. Sind mehr als zwei Datenfelder im Übertragungsrahmen 1 vorgesehen, so sind zumindest in zwei der Datenfelder Daten unterschiedlichen Formats abgelegt, wobei die Position dieser Datenfelder im Übertragungsrahmen 1 unerheblich ist.

Durch gestrichelte Linien in Figur 2 ist angedeutet, daß das erste Datenfeld 15 zusätzlich eine erste datenfeldspezifische Kennung 45 umfassen kann, die den Aufbau und/oder den Inhalt des ersten Datenfeldes 15 kennzeichnet. Entsprechend kann das zweite Datenfeld 20 eine zweite datenfeldspezifische Kennung 50 umfassen, die den Aufbau und/oder den Inhalt des zweiten Datenfeldes 20 kennzeichnet. Entsprechend kann das dritte Datenfeld 25 eine dritte datenfeldspezifische Kennung 55 umfassen, die den Aufbau und/oder den Inhalt des dritten Datenfeldes 25 kennzeichnet und das vierte Datenfeld 30 kann eine vierte datenfeldspezifische Kennung 75 umfassen, die den Aufbau und/oder den Inhalt des vierten Datenfeldes 30 kennzeichnet.

Die erste Kennung 35 kann Angaben über die Anzahl der Datenfelder 15, 20, 25, 30 in der Kurznachricht 5 umfassen. Zusätzlich oder alternativ kann die erste Kennung 35 Angaben über die Datenformate der in den Datenfeldern 15, 20, 25, 30 abgelegten Daten umfassen. Zusätzlich oder alternativ können auch Angaben über die Größe der Datenfelder 15, 20, 25, 30 in der ersten Kennung 35 enthalten sein. Die zweite Kennung 40 kann dann Angaben über die Datenart der in den Datenfeldern 15, 20, 25, 30 abgelegten Daten umfassen. So kann die zweite Kennung 40 beispielsweise Angaben darüber enthalten, ob in einem Datenfeld Audiodaten oder Bilddaten abgelegt sind.

Es kann nun vorgesehen sein, daß der Netzbetreiber 70 auf Anforderung des ersten Teilnehmers 60 das erste Datenfeld 15 mit der ersten Kennung 35 und der zweiten Kennung 40 als Mitteilung an den ersten Teilnehmer 60 übermittelt, so daß der erste Teilnehmer 60 aufgrund der in der ersten Kennung 35 und der zweiten Kennung 40 übertragenen Informationen über den Aufbau und/oder den Inhalt der Kurznachricht 5 prüfen kann, welche Datenfelder der Kurznachricht 5 er aufgrund seiner Funktionalität vom Netzbetreiber 70 herunterladen und/oder wiedergeben kann. Außerdem kann beim ersten Teilnehmer 60 eine Entscheidung darüber getroffen werden, welche der lesbaren Datenfelder der Kurznachricht 5 überhaupt vom Netzbetreiber 70 heruntergeladen werden sollen, wenn nicht alle lesbaren Datenfelder der Kurznachricht 5 beim ersten Teilnehmer 60 von Interesse sind und Übertragungskapazität eingespart werden soll. Wenn nach der Aufforderung des ersten Teilnehmers 60 das gesamte erste Datenfeld 15 mit der ersten Kennung 35 und der zweiten Kennung 40 an den ersten Teilnehmer 60 übertragen werden soll, so sollte möglichst gewährleistet sein, daß die im ersten Datenfeld 15 abgelegten Daten in einem von allen Teilnehmern des Telekommunikationsnetzes 10 lesbaren Datenformat vorliegen. Dies ist insbesondere dann gegeben, wenn die im ersten Datenfeld 15 abgelegten Daten zusammen mit den Daten in der ersten Kennung 35 und in der zweiten Kennung 40 in einem Textformat vorliegen, wobei sich beispielsweise das SMS-Format (Short-Message-Service) gemäß dem GSM-Standard (Global System for Mobile Communications) anbietet, da es in einem nach den Anforderungen des GSM-Systems ausgebildeten Telekommunikationsnetz von den nach dem GSM-Standard ausgebildeten Teilnehmern bzw. Mobilfunkgeräten dieses Telekommunikationsnetzes lesbar ist. Dabei kann das erste Datenfeld 15 dem für den SMS-Kurznachrichtendienst nach dem GSM-Standard bisher schon vorgeschriebenen Datenfeld entsprechen und in seiner Größe auf die 160 7-Bit ASCII-Textzeichen (American Standard Code for Information Interchange) beschränkt sein.
Die Übertragung von längeren Mitteilungen ist mit Hilfe von verketteten SMS-Kurznachrichten möglich.
Die anderen Datenfelder 20, 25, 30 müssen in ihrer Größe nicht beschränkt sein.

Auch die datenfeldspezifischen Kennungen 45, 50, 55, 75 können Angaben über die Datenformate im jeweils zugehörigen Datenfeld 15, 20, 25, 30 und/oder über die Größe des jeweils zugehörigen Datenfeldes 15, 20, 25, 30 und/oder über die Datenart in dem jeweiligen Datenfeld 15, 20, 25, 30 umfassen. Wenn vereinbart ist, daß im ersten Datenfeld 15 die Daten gemäß dem GSM-SMS-Textformat vorliegen und dieses Datenfeld beispielsweise auf 160 7-Bit ASCII-Textzeichen begrenzt ist, so kann die erste datenspezifische Kennung 45 auch entfallen. Es kann vorgesehen sein, daß in jedem Datenfeld 15, 20, 25, 30 nur Daten eines einzigen Datenformats abgelegt sind. Es kann aber auch vorgesehen sein, daß zumindest in einem der Datenfelder Daten mehrerer Datenformate abgelegt sind, insbesondere im zweiten Datenfeld 20 und/oder gegebenenfalls in einen oder mehreren weiteren Datenfeldern 25, 30. Es kann natürlich auch vorgesehen sein, daß die Kurznachricht 5 mehr als die vier in Figur 2 dargestellten Datenfelder umfaßt.

Es kann auch vorgesehen sein, daß die Mitteilung des Netzbetreibers 70 über Aufbau und/oder Inhalt der Kurznachricht 5 an den ersten Teilnehmer 60 nach dessen Aufforderung vom Netzbetreiber 70 durch Auswertung der datenfeldspezifischen Kennungen 45, 5C, 55, 75 erstellt und anschließend an den ersten Teilnehmer 60 gesendet wird, so daß in diesem Fall die erste Kennung 35 und die zweite Kennung 40 nicht erforderlich sind und auch das erste Datenfeld 15 nicht an den ersten Teilnehmer 60 versendet werden muß. Eine solche Vorgehensweise bietet sich besonders beim zweiten Ausführungsbeispiel an, bei dem der Netzbetreiber 70 die aus dem vom Telekommunikationsnetz 10 verschiedenen Datennetz 80 kommende Kurznachricht 5 empfängt, die im allgemeinen nicht den Standards des Telekommunikationsnetzes 10 entspricht und somit nicht von allen Teilnehmern des Telekommunikationsnetzes 10 gelesen werden kann. In diesem Fall erzeugt der Netzbetreiber 70 eine von allen Teilnehmern des Telekommunikationsnetzes 10 lesbare Mitteilung über den Aufbau und/oder den Inhalt der eingegangenen Kurznachricht 5. Die vom Datennetz 80 empfangene Kurznachricht 5 kann dabei jedoch auch in einer vom beschriebenen Übertragungsrahmen 1 verschiedenen Struktur, je nach den dem Datennetz 80 zugrundeliegenden Standards vorliegen, die jedoch vom Netzbetreiber 70, gegebenenfalls nach Umwandlung in einen beschriebenen Übertragungsrahmen 1 durch die Netzanschlußeinheit 85, erkannt und ausgewertet werden muß, damit die entsprechende Mitteilung an den ersten Teilnehmer 60 erstellt werden kann. Die auf diese Weise erzeugte Mitteilung über Aufbau und/oder Inhalt der Kurznachricht 5 kann also in einem von allen Teilnehmern des Telekommunikationsnetzes 10 lesbaren Datenformat an den ersten Teilnehmer 60 versendet werden, wozu insbesondere wieder das GSM-SMS-Textformat unter Verwendung eines Datenfeldes mit beispielsweise 160 7-Bit ASCII-Textzelchen vorgesehen sein kann.

Anhand von Figur 3 wird nun ein konkretes Beispiel eines Übertragungsrahmens 1 für eine Kurznachricht 5 beschrieben. Die Kurznachricht 5 ist dabei als Multimedia-Kurznachricht ausgebildet. Gleiche Bezugszeichen in Figur 3 kennzeichnen gleiche Elemente wie in Figur 2. Dabei sind gemäß Figur 3 im Übertragungsrahmen 1 das erste Datenfeld 15, das zweite Datenfeld 20 und das dritte Datenfeld 25 vorgesehen. Datenfeldspezifische Kennungen in den einzelnen Datenfeldern 15, 20, 25 sind nicht vorgesehen. Das erste Datenfeld 15 umfaßt dabei Textdaten im ASCII-Textformat, das zweite Datenfeld 20 umfaßt Audiodaten beispielsweise gemäß dem WAV-Format (Wave) und das dritte Datenfeld 25 umfaßt Bilddaten, beispielsweise gemäß dem GIF-Format (Graphic Interchange Format). Das erste Datenfeld 15 mit den Textdaten ist entsprechend dem GSM-SMS-Kurznachrichtendienst textformatiert. Durch eine gestrichelte Linie zwischen der ersten Kennung 35 und der zweiten Kennung 40 ist in Figur 3 angedeutet, daß die erste Kennung 35 und die zweite Kennung 40 zu einer gemeinsamen Kennung zusammengefaßt sein können. Eine solche gemeinsame Kennung 35, 40 gibt die Zahl der Datenfelder 15, 20, 25 und den Inhalt sowie die Größe des zweiten Datenfeldes 20 und des dritten Datenfeldes 25 an. So könnte die gemeinsame Kennung 35, 40 folgendermaßen aussehen:

### "Multipart/2/Audio/7654/Image/12345"

Diese gemeinsame Kennung 35, 40 sagt aus, daß es sich um eine Kurznachricht aus mehreren Datenfeldern gemäß dem Stichwort "Multipart" handelt. Die Ziffer "2" gibt an, daß neben dem immer vorhandenen ersten Datenfeld 15 mit den Textdaten und der Länge von 160 7-Bit ASCII-Textzeichen zwei weitere Datenfelder 20, 25 im Übertragungsrahmen 1 der Kurznachricht 5 vorliegen. Als erste Datenart in der gemeinsamen Kennung 35, 40 ist dabei "Audio" genannt, so daß aus der gemeinsamen Kennung 35, 40 hervorgeht, daß es sich bei den im zweiten Datenfeld 20 abgelegten Daten um Audiodaten handelt. Als zweites wird die Datenart "Image" in der gemeinsamen Kennung 35, 40 genannt, so daß aus der gemeinsamen Kennung 35, 40 hervorgeht, daß es sich bei den im dritten Datenfeld 25 abgelegten Daten um Bilddaten handelt. Anschließend an die Datenart ist in der gemeinsamen Kennung 35, 40 jeweils die Größe des zugehörigen Datenfeldes 20, 25 angegeben, so daß aus der gemeinsamen Kennung 35, 40 eine Länge einer im zweiten Datenfeld 20 übertragenen Audiodarei mit den Audiodaten von 7654 byte und einer im dritten Datenfeld 25 übertragenen Bilddatei mit den Bilddaten von 12345 byte hervorgeht. Für das erste Datenfeld 15 sind in der gemeinsamen Kennung 35, 40 keine Angaben erforderlich, da es sich hierbei in dem beschriebenen Beispiel immer um Textdaten handelt, die zum GSM-SMS-Textformat kompatibel und in ihrer Anzahl auf 160 7-Bit ASCII-Textzeichen beschränkt sind. Es kann zusätzlich vorgesehen sein, daß die gemeinsame Kennung 35, 40 auch das Datenformat für die Daten im zweiten Datenfeld 20 und im dritten Datenfeld 25 angibt. Für die Audiodaten im zweiten Datenfeld 20 könnte dann in der gemeinsamen Kennung 35, 40 als Datenformat das WAV-Format angegeben werden. Für die Bilddaten im dritten Datenfeld 25 könnte in der gemeinsamen Kennung 35, 40 als Datenformat das GIF-Format angegeben werden. Möglich ist aber auch, daß die Angaben "Audio" und "Image" der oben angegebenen gemeinsamen Kennung 35, 40 zugleich den Inhalt und auch das Format der in den entsprechenden Datenfeldern 20, 25 abgelegten Daten beschreiben, wobei dann beispielsweise vorausgesetzt ist, daß Audiodaten immer in einem vorgegebenen Format, beispielsweise dem WAV-Format und Bilddaten ebenfalls immer in einem vorgegebenen Format, beispielsweise dem GIF-Format im entsprechenden Datenfeld des Übertragungsrahmens 1 vorliegen. Aufgrund der an den ersten Teilnehmer 60 übermittelten gemeinsamen Kennung 35, 40 kann bei diesem entschieden werden, ob ein Herunterladen des zweiten Datenfeldes 20 und/oder des dritten Datenfeldes 25 vom Netzbetreiber 70 überhaupt sinnvoll oder gewollt ist. Wenn der erste Teilnehmer 60 nicht audiofähig ist, d.h. keine Verarbeitungs- oder Wiedergabemöglichkeit für Audiodaten besitzt, so ist ein Herunterladen der Audiodaten aus dem zweiten Datenfeld 20 vom Netzbetreiber 70 nicht sinnvoll. Wenn der erste Teilnehmer 60 nicht bildfähig ist, d.h. keine Verarbeitung oder Wiedergabe von Bilddaten beim ersten Teilnehmer 60 möglich ist, so ist ein Herunterladen von Bilddaten aus dem dritten Datenfeld 25 vom Netzbetreiber 70 ebenfalls nicht sinnvoll.

Zur Auswahl der vom Netzbetreiber 70 herunterzuladenden Datenfelder des Übertragungsrahmens 1 der Kurznachricht 5 kann es vorgesehen sein, die gemeinsame Kennung 35, 40 an einer Anzeigevorrichtung des ersten Teilnehmers 60 anzuzeigen. Somit können die Informationen über den Aufbau und/oder den Inhalt der Kurznachricht 5 beim Teilnehmer 60 aus der empfangenen Mitteilung ausgelesen und an der Anzeigevorrichtung dargestellt werden.

Die Darstellung kann dabei einer einfachen, gegebenenfalls scrollbaren, Textdarstellung an der Anzeigevorrichtung entsprechen, wie dies bei der Darstellung von empfangenen SMS-Textnachrichten üblich ist. Es kann aber auch vorgesehen sein, daß die Informationen über den Aufbau und/oder den Inhalt der Kurznachricht 5 zunächst vom ersten Teilnehmer 60 ausgewertet werden. Im Falle einer menügesteuerten Bedienungsmöglichkeit beim ersten Teilnehmer 60 kann aufgrund dieser Auswertung ein neuer Menü- oder Untermenüpunkt erzeugt und in die bestehende Menüstruktur eingebaut werden, so daß die Informationen über den Aufbau und/oder den Inhalt der Kurznachricht 5 menügesteuert an der Anzeigevorrichtung dargestellt werden können. Die Auswertung der Informationen über den Aufbau und/oder den Inhalt der Kurznachricht 5 kann zusätzlich oder alternativ auch dahingehend erfolgen, daß die Darstellung dieser Informationen an der Anzeigevorrichtung in Form einer Verzeichnisstruktur erfolgt, die die Inhalte der Datenfelder der Kurznachricht 5 als Dateien in einem Verzeichnis auflistet. Aus einer solchen Verzeichnisstruktur kann dann beispielsweise mittels Cursorsteuerung komfortabel auf einzelne Dateien der Kurznachricht zugegriffen werden.

Die Auswertung der Informationen über den Aufbau und/oder den Inhalt der Kurznachricht 5 kann durch eine Auswerteeinheit mit entsprechenden Softwareprogrammen in der Teilnehmerstation des ersten Teilnehmers 60 direkt und damit unabhängig vom Netzbetreiber 70 erfolgen. Voraussetzung ist natürlich, daß die dafür erforderlichen Softwareprogramme auch in der Teilnehmerstation abgelegt sind und die Auswerteeinheit die zum Abarbeiten der Softwareprogramme notwendige Hardwareplattform zur Verfügung stellt. Ansonsten ist abgesehen von der reinen Textdarstellung der Mitteilung an der Anzeigevorrichtung beispielsweise gemäß dem entsprechenden Mobilfunkstandard keine Auswertung der Informationen über den Aufbau und/oder den Inhalt der Kurznachricht 5 in der Teilnehmerstation möglich.

Zusätzlich oder alternativ zur beschriebenen Auswertung der Informationen über den Aufbau und/oder den Inhalt der Kurznachricht 5 direkt in der Teilnehmerstation kann es auch vorgesehen sein, eine netzbetreiberabhängige Auswertung vorzusehen. Dazu kann eine vom Netzbetreiber an den Benutzer der Teilnehmerstation ausgegebene Zugangsberechtigungskarte in Form eines Identifikationsmoduls dienen. Diese Karte, die beispielsweise als Chipkarte, insbesondere als SIM-Karte (Subscriber Identity Module), ausgebildet sein kann, umfaßt dann eine Auswertevorrichtung, auf der Softwareprogramme zur Auswertung der Informationen über den Aufbau und/oder den Inhalt der Kurznachricht 5 ablaufen können, die ebenfalls auf der Karte gespeichert sind. Die Zugangsberechtigungskarte ist dabei über eine besondere Schnittstelle, beispielsweise über eine SAT-Schnittstelle (SIM Application Toolkit) mit der Teilnehmerstation verbunden. Diese Schnittstelle ermöglicht es dem Netzbetreiber 70, über die Zugangsberechtigungskarte mit entsprechender Hardwareplattform und Softwareimplentierung Aktionen auf der Teilnehmerstation auszulöser oder Daten an die Teilnehmerstation zu überspielen. So können je nach Vertrag des Benutzers mit dem Netzbetreiber eine geeignete Auswertevorrichtung und entsprechende Softwareprogramme auf der Karte zur Verfügung gestellt werden, die eine oder mehrere Optionen zur Auswertung der Informationen über den Aufbau und/oder den Inhalt der Kurznachricht 5 ermöglichen. Die Softwareprogramme können dabei vom Netzbetreiber 70 über das Telekommunikationsnetz 10 auf der Karte auch aktualisiert, erweitert oder zumindest teilweise gelöscht oder gesperrt werden. Wird die Auswertung mittels der Zugangsberechtigungskarte durchgeführt, so ist sie unabhängig vom Leistungsumfang der Teilnehmerstation selbst möglich, wobei die Darstellung der Informationen über den Aufbau und/oder den Inhalt der Kurznachricht 5 natürlich nach wie vor an der Anzeigevorrichtung der Teilnehmerstation erfolgt, wobei entsprechende Daten zwischen der Teilnehmerstation und der Zugangsberechtigungskarte über die beschriebene Schnittstelle übertragen werden.

Es kann auch vorgesehen sein, daß die Informationen über den Aufbau und/oder den Inhalt der Kurznachricht 5 auf einer weiteren Karte unabhängig sowohl von der Teilnehmerstation als auch vom Netzbetreiber 70 ausgewertet werden können. Eine solche Karte kann dabei von einem geeigneten Diensteanbieter zur Verfügung gestellt werden. Das Bezugszeichen 70 kennzeichnet in diesem Fall dann den Diensteanbieter. Diese weitere Karte kann wie die Zugangsberechtigungskarte in einen jeweils eigenen Kartenschacht mit Kartenlesevorrichtung in die Teilnehmerstation des ersten Teilnehmers 60 eingelegt werden. Es kann jedoch auch ein extern an die Teilnehmerstation angeschlossener Kartenleser für die Karte des Diensteanbieters vorgesehen sein.

Für die Auswertung der Informationen über den Aufbau und/oder den Inhalt der Kurznachricht 5 müssen diese der Auswerteeinheit der Teilnehmerstation und/oder der Auswertevorrichtung auf der Zugangsberechtigungskarte zugeführt werden. Die Auswerteeinheit beziehungsweise -vorrichtung muß dann in der Lage sein, die mit der Mitteilung übertragenen Daten als Informationen über den Aufbau und/oder den Inhalt der Kurznachricht 5 zu erkennen und sie beispielsweise von reinen Textnachrichten zu unterscheiden. Dazu umfaßt die Mitteilung, die gemäß Figur 5 als erstes Datenfeld 15 gekennzeichnet ist, eine erste Kopfinformation 90, die eine Information über den weiteren Inhalt der Mitteilung umfaßt. Die erste Kopfinformation kann dabei die Information umfassen, wonach die Mitteilung Informationen über den Aufbau und/oder den Inhalt der Kurznachricht 5 enthält. Die Auswerteeinheit beziehungsweise -vorrichtung erkennt die Mitteilung somit als Mitteilung über eine beim Netzbetreiber 70 vorliegende Kurznachricht 5 und ist dann in der Lage, die für eine vorgegebene Auswertung dieser Informationen erforderlichen Softwareprogramme auszuwählen und durchzuführen. Die erste Kopfinformation 90 ist jedoch nicht erforderlich, wenn die Auswerteeinheit beziehungsweise -vorrichtung lediglich die Auswertung von Informationen über den Aufbau und/oder den Inhalt der Kurznachricht 5 ermöglicht.

Es kann auch wie in Figur 5 dargestellt vorgesehen sein, eine zweite Kopfinformation 95 in der Mitteilung vorzusehen. Die erste Kopfinformation 90 enthält dann lediglich eine Information über das Vorhandensein der zweiten Kopfinformation 95, beispielsweise in Form eines gesetzten Bits. Die zweite Kopfinformation 95 enthält dann Informationen über die Art der durchzuführenden Auswertung der Mitteilung. Die durchzuführende Auswertung kann dabei darin bestehen, die Mitteilung lediglich in Textform an der Anzeigevorrichtung darzustellen. Handelt es sich bei der Mitteilung um Informationen über den Aufbau und/oder den Inhalt der Kurznachricht 5, so kann die zweite Kopfinformation 95 auch eine menügesteuerte Anzeige, insbesondere mit Verzeichnisstruktur, dieser Informationen für die durchzuführende Auswertung vorgeben. Die zweite Kopfinformation 95 ist somit besonders dann erforderlich, wenn zwischen mehreren auf der Auswerteeinheit beziehungsweise - Vorrichtung implementierten Auswertemöglichkeiten der Informationen über den Aufbau und/oder den Inhalt der Kurznachricht 5 gewählt werden kann.

Der ersten Kopfinformation 90 und gegebenenfalls der zweiten Kopfinformation 95 schließen sich dann im ersten Datenfeld 15 gemäß Figur 5 die erste Kennung 35 und die zweite Kennung 40 an.

Durch die Anzeige der Informationen über den Aufbau und/oder den Inhalt der Kurznachricht 5 an der Anzeigevorrichtung der Teilnehmerstation kann der Benutzer beispielsweise menügesteuert eine weitere Verarbeitung der Kurznachricht 5 oder von Teilen der Kurznachricht 5, beispielsweise eines oder mehrerer Datenfelder der Kurznachricht 5, einleiten. Dies kann durch Benutzereingabe an einer Eingabeeinheit der Teilnehmerstation beispielsweise mittels Cursorsteuerung erfolgen. Der Benutzer kann dabei nach seinen Bedürfnissen Befehlskriterien einbeziehungsweise vorgeben, nach denen die Kurznachricht 5 verarbeitet werden soll. Liegen in der Kurznachricht Videodaten vor, so kann der Benutzer beispielsweise vorgeben, daß diese Daten der Kurznachricht 5 beim Netzbetreiber 70 gelöscht werden, da er sie nicht sehen möchte oder seine Teilnehmerstation deren Darstellung nicht zuläßt. Es wird dann ausgehend von der Benutzereingabe eine Befehlsnachricht mit entsprechenden Verarbeitungskommandos erstellt und an den Netzbetreiber 70 abgesendet. Die Befehlsnachricht kann dabei ebenfalls gemäß der Erfindung in Form einer Kurznachricht 5 für den Netzbetreiber 70 an das Telekommunikationsnetz 10 abgesetzt werden, wobei eine Mitteilung entweder vorab oder zusammen mit der Befehlsnachricht an den Netzbetreiber 70 gesendet wird. Die Mitteilung kann dabei wie beschrieben aufgebaut sein und Informationen über den Aufbau und/oder den Inhalt der Befehlsnachricht umfassen. Sie kann dazu wie beschrieben mit einer ersten Kopfinformation 90 und gegebenenfalls einer zweiten Kopfinformation 95 versehen sein, um das Vorhandensein einer Befehlsnachricht mittels der ersten Kopfinformation 90 und gegebenenfalls eine vom ersten Teilnehmer 60 gewünschte Auswertung und Verarbeitung der Befehlsnachricht mittels der zweiten Kopfinformation 95 beim Netzbetreiber 70 zu veranlassen, sofern zwischen mehreren verschiedenen Auswerte- und/oder Verarbeitungsarten gewählt werden kann. Ist nur die erste Kopfinformation 90 mit der Angabe über das Vorhandensein einer Befehlsnachricht vorhanden, so wird diese vom Netzbetreiber 70 auf eine beim Netzbetreiber 70 vorgegebene Art ausgewertet und verarbeitet.

Die Befehlsnachricht kann dabei in Form einer SMS-Nachricht gemäß dem GSM-Standard vorliegen, wobei sich die Mitteilung auf die erste Kopfinformation 90 und gegebenenfalls die zweite Kopfinformation 95 beschränken kann. Ist nur die erste Kopfinformation 90 in der Mitteilung vorgesehen, so kann beispielsweise beim Netzbetreiber 70 lediglich eine Anzeige der Befehlsnachricht an einer Anzeigevorrichtung der Zentralstation des Netzbetreibers 70 als Auswertung beziehungsweise Verarbeitung der Befehlsnachricht vorgegeben sein. Verarbeitungen der für den ersten Teilnehmer 60 beim Netzbetreiber 70 vorliegenden Kurznachricht können dann von einem Operator auf der Grundlage der Befehlsnachricht veranlaßt werden.

Bei Vorhandensein der zweiten Kopfinformation 95 in der Mitteilung für die Befehlsnachricht kann eine vom ersten Teilnehmer 60 gewünschte Verarbeitung der für den ersten Teilnehmer 60 beim Netzbetreiber 70 vorliegenden Kurznachricht auch bereits vorgegeben sein, so daß sie beim Netzbetreiber 70 automatisch eingeleitet wird.

Die Befehlsnachricht kann jedoch beim ersten Teilnehmer 60 zusätzlich oder alternativ zur manuellen Benutzereingabe auch automatisch auf der Grundlage der ausgewerteten Informationen über den Aufbau und/oder den Inhalt der Kurznachricht 5 erstellt werden. Es kann dabei sowohl bei der automatischen wie bei der manuellen Erstellung der Befehlsnachricht vorgesehen sein, daß nur solche Befehle zur Verarbeitung der Kurznachricht 5 erzeugbar sind, die mit dem Leistungsumfang des ersten Teilnehmers 60 beziehungsweise der entsprechenden Teilnehmerstation vereinbar sind. Ist der erste Teilnehmer 60 beispielsweise nicht videofähig, so kann keine Befehlsnachricht erzeugt werden, wonach in der Kurznachricht 5 enthaltene Videodaten zum ersten Teilnehmer 60 heruntergeladen werden sollen. Vielmehr kann sogar automatisch ein Befehl in die Befehlsnachricht aufgenommen werden, wonach die entsprechenden Videodaten in der Kurznachricht 5 beim Netzbetreiber 70 gelöscht werden sollen. Die Befehlsnachricht kann auch automatisch nach vom Benutzer und/oder vom Netzbetreiber 70 vorgegebenen Befehlskriterien erstellt werden. Dazu wird beim ersten Teilnehmer 60 in der Auswerteeinheit der zugeordneten Teilnehmerstation und/oder in der Auswertevorrichtung der Zugangsberechtigungskarte ein sogenanntes Profile abgelegt, das die entsprechenden Befehlskriterien enthält. Die Befehlskriterien können dabei für verschiedene Informationen über den Aufbau und/oder den Inhalt der Kurznachricht 5 vorgegeben sein und in Abhängigkeit dieser Informationen über den Aufbau und/oder den Inhalt der Kurznachricht 5 entsprechende Befehlsnachrichten erzeugen, so daß beispielsweise bei Informationen über in der Kurznachricht 5 vorliegende Videodaten ein Befehlskriterium vorgesehen ist, das eine Befehlsnachricht zur Löschung dieser Videodaten in der Kurznachricht 5 erzeugt. Das Profile kann dabei auch zumindest teilweise beim Netzbetreiber 70 selbst abgelegt sein. Erkennt der Netzbetreiber 70 in einer für den ersten Teilnehmer 60 vorliegenden Kurznachricht 5 Videodaten, so kann er sie bei entsprechend vorliegenden Befehlskriterium gleich selbst löschen ohne den ersten Teilnehmer 60 über diese Videodaten zu informieren. Auch eine Vorgabe über die Verwendung des Push- oder des Poll-Service kann im Profile beim Netzbetreiber 70 abgelegt sein. Dabei kann beispielsweise bei mehreren vorhandenen Datenarten in der beim Netzbetreiber 70 für den ersten Teilnehmer 60 vorliegenden Kurznachricht 5 vorgesehen sein, den Push-Service und den Poll-Service jeweils für verschiedene Datenarten vorzusehen, also zum Beispiel den Push-Service für Videodaten und den Poll-Service für Audiodaten.

Entsprechend der Auswertung der Informationen über den Aufbau und/oder den Inhalt der Kurznachricht 5 kann auch die Erstellung der Befehlsnachricht netzbetreiberunabhängig mittels der Auswerteeinheit des ersten Teilnehmers 60 und/oder netzbetreiberabhängig mittels der Auswertevorrichtung auf der Zugangsberechtigungskarte erfolgen. Es kann jedoch auch vorgesehen sein, daß die Erstellung der Befehlsnachricht netzbetreiberunabhängig und unabhängig von der Teilnehmerstation des ersten Teilnehmers 60 mittels einer entsprechenden Auswertevorrichtung auf der Karte eines Diensteanbieters erfolgt, wenn auch bereits die Auswertung der Informationen über den Aufbau und/oder den Inhalt der Kurznachricht 5 auf diese Weise erfolgt.

Die Kurznachricht 5 könnte auch einen Übertragungsrahmen 1 aus genau zwei Datenfeldern 15, 20 umfassen, wobei im ersten Datenfeld 15 wie beschrieben die Textdaten mit der gemeinsamen Kennung 35, 40 vorliegen und im zweiten Datenfeld 20 mehrere Datenarten oder Medien zusammengefaßt sind. Es kann aber auch vorgesehen sein, daß N in der Kurznachricht 5 zu übertragende Datenarten oder Medien auf N bzw. N+1 Datenfelder im Übertragungsrahmen 1 der Kurznachricht 5 verteilt werden. Der erste Teilnehmer 60 kann alle Datenfelder der Kurznachricht 5 einzeln oder zusammen vom Netzbetreiber 70 herunterladen.

Beim ersten Teilnehmer 60 kann auch bereits eine Auswertung der übertragenen gemeinsamen Kennung 35, 40 erfolgen, so daß ihre Anzeige an der Anzeigevorrichtung des ersten Teilnehmers 60 bereits angibt, welche Datenfelder der Kurznachricht 5 überhaupt vom Netzbetreiber 70 heruntergeladen werden können aufgrund der Funktionalität des ersten Teilnehmers 60.

Der zweite Teilnehmer 65 erzeugt eine Kurznachricht 5 im beschriebenen Übertragungsrahmen 1. Die Erzeugung eines Übertragungsrahmens 1 beim zweiten Teilnehmer 65 kann dabei einfach durch Aneinanderfügen der einzelnen Datenfelder 15, 20, 25, 30 gegebenenfalls unter Hinzufügen von jeweils einer der datenfeldspezifischen Kennungen 45, 50, 55, 75 erfolgen. Der Netzbetreiber 70 wiederum empfängt und speichert Kurznachrichten 5 im beschriebenen Übertragungsrahmen 1. Bei entsprechender Funktionalität des ersten Teilnehmers 60 kann es vorgesehen sein, den Übertragungsrahmen 1 vollständig vom Netzbetreiber 70 herunterzuladen und zum ersten Teilnehmer 60 zu übertragen. In diesem Fall empfängt der erste Teilnehmer 60 die Kurznachricht 5 im beschriebenen Übertragungsrahmen 1, speichert sie gegebenenfalls ab und/oder gibt sie optisch und/oder akustisch wieder. Der erste Teilnehmer 60 empfängt zumindest ein einzelnes Datenfeld des Übertragungsrahmens 1, speichert es gegebenenfalls ab und/oder gibt es optisch und/oder akustisch wieder. Eine Auswertung empfangener Datenfelder 15, 20, 25, 30 beim Netzbetreiber 70 und beim ersten Teilnehmer 60 kann beispielsweise aufgrund der datenfeldspezifischen Kennungen 45, 50, 55, 75 erfolgen, falls diese mit den zugehörigen Datenfeldern 15, 20, 25, 30 übertragen werden oder aufgrund der gegebenenfalls übertragenen ersten Kennung 35 und/oder zweiten Kennung 40.

Der erfindungsgemäße Übertragungsrahmen 1 ist nicht auf die Verwendung in einem Funktelekommunikationsnetz beschränkt, sondern kann auch in einem drahtgebundenen Telekommunikationsnetz 10 zur Anwendung kommen, wobei dann auch die Teilnehmer 60, 65 und der Netzbetreiber 70 drahtgebunden sind. Es kann auch vorgesehen sein, daß einer der beiden Teilnehmer 60, 65 über ein drahtgebundenes Telekommunikationsnetz 10 und der andere der beiden Teilnehmer 60, 65 über ein drahtloses Telekommunikationsnetz 10 mit dem Netzbetreiber 70 in Verbindung steht, so daß der Übertragungsrahmen 1 sowohl für die Übertragung von Kurznachrichten 5 in dem drahtgebundenen als auch in dem drahtlosen Telekommunikationsnetz 10 geeignet ist.

Nach dem Eintreffen der Kurznachricht 5 beim Netzbetreiber 70 des Telekommunikationsnetzwerkes 10 prüft der Netzbetreiber 70, ob vom ersten Teilnehmer 60 Signalisierungsinformationen empfangen werden, die eine Aktivierung des ersten Teilnehmers 60 kennzeichnen. Daraufhin sendet der Netzbetreiber 70 dem ersten Teilnehmer 60 eine Nachricht, die den ersten Teilnehmer 60 über das Vorhandensein einer an ihn abgesetzten und beim Netzbetreiber 70 gespeicherten Kurznachricht 5 informiert. Daraufhin kann beim ersten Teilnehmer 60 entschieden werden, ob Angaben über den Aufbau und/oder den Inhalt der Kurznachricht 5 vom Netzbetreiber 70 angefordert werden sollen. Ist dies der Fall, so wird vom ersten Teilnehmer 60 ein entsprechendes Aufforderungssignal über das Telekommunikationsnetz 10 an den Netzbetreiber 70 übertragen. Der Netzbetreiber 70 erzeugt daraufhin eine Mitteilung, die Informationen über den Aufbau und/oder den Inhalt der Kurznachricht 5 umfaßt und sendet diese Mitteilung über das Telekommunikationsnetz 10 an den ersten Teilnehmer 60. Die Mitteilung kann dabei beispielsweise das erste textbasierte Datenfeld 15 im Übertragungsrahmen 1 der Kurznachricht 5 umfassen, das die erste Kennung 35 und die zweite Kennung 40 gemäß Figur 2 und Figur 3 umfaßt. Es kann aber auch vorgesehen sein, daß das erste Datenfeld 15 der Kurznachricht 5 weder die erste Kennung 35 noch die zweite Kennung 40 sondern lediglich die erste datenfeldspezifische Kennung 45 umfaßt. Der Netzbetreiber 70 kann dann die Mitteilung über den Aufbau und/oder den Inahlt der Kurznachricht 5 durch Auswertung aller datenfeldspezifischen Kennungen 45, 50, 55, 75 erstellen und beispielsweise ein textbasiertes Datenfeld für die Übertragung der so erstellten Mitteilung erzeugen, das von möglichst allen Teilnehmern des Telekommunikationsnetzes 10 lesbar ist. Dieses textbasierte Datenfeld kann dabei nach dem GSM-SMS-Textformat mit einer Größe von bis zu 160 7-Bit ASCII-Textzeichen realisiert werden. Die von dem Netzbetreiber 70 erzeugte Mitteilung kann somit Informationen über den Aufbau der Kurznachricht 5 umfassen, die beispielsweise Angaben über die Anzahl der Datenfelder 15, 20, 25, 30 und/oder über die Datenformate der in den Datenfeldern 15, 20, 25, 30 abgelegten Daten und/oder über die Größe der Datenfelder 15, 20, 25, 30 beinhalten können. Die vom Netzbetreiber 70 erzeugte Mitteilung kann auch Informationen über den Inhalt der Kurznachricht 5 umfassen, die Angaben über das Vorhandensein verschiedener Datenarten in den verschiedenen Datenfeldern 15, 20, 25, 30 der Kurznachricht 5 beinhalten können. Für den Fall, daß die Mitteilung die erste Kennung 35 und die zweite Kennung 40 umfaßt, werden die Informationen über den Aufbau der Kurznachricht 5 mit der ersten Kennung 35 und die Informationen über den Inhalt der Kurznachricht 5 mit der zweiten Kennung 40 in der entsprechenden Mitteilung vom Netzbetreiber 70 zum ersten Teilnehmer 60 übertragen. Die vom Netzbetreiber 70 zum ersten Teilnehmer 60 übertragene Mitteilung kann zusätzliche Angaben über den zweiten Teilnehmer 65 als Absender der in der Kurznachricht 5 gespeicherten Daten umfassen. Auf diese Weise wird der erste Teilnehmer 60 über den Absender der Kurznachricht 5 informiert. Aufgrund der vom Netzbetreiber 70 über das Telekommunikationsnetz 10 zum ersten Teilnehmer 60 übertragenen Mitteilung kann bei dem ersten Teilnehmer 60 entschieden werden, welche Datenfelder 15, 20, 25, 30 der Kurznachricht 5 überhaupt vom ersten Teilnehmer 60 lesbar sind und welche der lesbaren Datenfelder vom Netzbetreiber 70 heruntergeladen werden sollen. Dazu sendet der erste Teilnehmer 60 eine entsprechende als Auswahlnachricht ausgebildete Befehlsnachricht über das Telekommunikationsnetz 10 an den Netzbetreiber 70, in der mindestens eines der Datenfelder 15, 20, 25, 30 der Kurznachricht 5 vom Netzbetreiber 70 des Telekommunikationsnetzes 10 angefordert wird. Die vom ersten Teilnehmer 60 angeforderten Datenfelder der Kurznachricht 5 werden dann vom Netzbetreiber 70 über das Telekommunikationsnetz 10 zum ersten Teilnehmer 60 übertragen und dort gegebenenfalls nach einer Vorverarbeitung zur Wiedergabe an einer Figur 1 nicht dargestellten Wiedergabevorrichtung gebracht. Werden zwei oder mehrere Datenfelder mittels der Auswahlnachricht vom ersten Teilnehmer 60 angefordert, so können diese entweder gemeinsam oder zeitlich getrennt vom Netzbetreiber 70 zum ersten Teilnehmer 60 übertragen werden.

Es kann auch vorgesehen sein, daß beim ersten Teilnehmer 60 nach Empfang und Wiedergabe der Mitteilung über den Aufbau und/oder den Inhalt der Kurznachricht 5 ein oder mehrere Datenfelder ausgewählt werden, die beim Netzbetreiber 70 gelöscht oder an einen weiteren Teilnehmer des Telekommunikationsnetzes 10 oder des Datennetzes 80 weitergeleitet werden sollen, beispielsweise weil sie vom ersten Teilnehmer 60 nicht lesbar oder wiedergebbar sind. Dazu sendet der erste Teilnehmer 60 im Falle des Löschungswunsches eine als Löschungsnachricht ausgebildete Befehlsnachricht über das Telekommunikationsnetz 10 an den Netzbetreiber 70, wobei in der Löschungsnachricht die Datenfelder der Kurznachricht 5 angegeben sind, die gelöscht werden sollen. Der Netzbetreiber 70 löscht dann gemäß den Angaben in der Löschungsnachricht die entsprechenden Datenfelder der Kurznachricht 5 aus einem in Figur 1 nicht dargestellten Speicher. Im Falle des Weiterleitungswunsches sendet der erste Teilnehmer 60 eine als Weiterleitungsnachricht ausgebildete Befehlsnachricht über das Telekommuniketionsnetz 10 an den Netzbetreiber 70, wobei in der Meiterleitungsnachricht die Datenfelder der Kurznachricht 5 angegeben sind, die weitergeleitet werden sollen. In der Weiterleitungsnachricht ist außerdem durch entsprechende Adressierung angegeben, an welchen oder an welche Teilnehmer die Datenfelder weitergeleitet werden sollen. Der Netzbetreiber 70 leitet dann gemäß den Angaben in der Weiterleitungsnachricht die entsprechenden Datenfelder der Kurznachricht 5 an den oder die adressierten Teilnehmer weiter, wobei verschiedene Datenfelder der Kurznachricht 5 an verschiedene oder gleiche Teilnehmer weitergeleitet werden können.

Selbstverständlich können beim ersten Teilnehmer 60 mittels der Auswahlnachricht auch alle Datenfelder 15, 20, 25, 30 der Kurznachricht 5 zum Herunterladen beim Netzbetreiber 70 angefordert werden. Genauso können mittels der Löschungsnachricht sämtliche Datenfelder 15, 20, 25, 30, also die gesamte Kurznachricht 5 zur Löschung beim Netzbetreiber 70 freigegeben werden.

Die Anforderung von Datenfeldern soll nun beispielhaft anhand des in Figur 3 dargestellten Übertragungsrahmens 1 konkret beschrieben werden. Auf die Nachricht über das Vorhandensein einer an ihn abgesetzten Kurznachricht 5 sendet der erste Teilnehmer 60 als Aufforderungssignal das Kommando "get MMK Content" (MMK=Multimedia-Kurznachricht) an den Netzbetreiber 70. Daraufhin empfängt der erste Teilnehmer 60 vom Netzbetreiber 70 eine Mitteilung die den Aufbau und den Inhalt der Multimedia-Kurznachricht 5 gemäß Figur 3 beschreibt. Diese Mitteilung ist dann beispielsweise die oben beschriebene Mitteilung "Multipart/2/Audio/7654/Image/12345". Aus dieser Mitteilung kann beim ersten Teilnehmer 60 nun erkannt werden, aus wieviel Datenfeldern 15, 20, 25 die Multimedia-Kurznachricht 5 besteht. Im beschriebenen Beispiel wird erkannt, daß die Multimedia-Kurznachricht 5 aus drei Datenfeldern 15, 20, 25 besteht. Darüberhinaus wird beim ersten Teilnehmer 60 erkannt, daß es sich bei den im ersten Datenfeld 15 abgelegten Daten um ASCII-Textdaten, bei dem im zweiten Datenfeld 20 abgelegten Daten um Audiodaten und bei den im dritten Datenfeld 25 abgelegten Daten um Bilddaten handelt. Die Mitteilung des Netzbetreibers 70 könnte dabei zusätzlich Angaben darüber enthalten, daß die Audiodaten beispielsweise im WAV-Format und die Bilddaten beispielsweise im GIF-Format in den entsprechenden Datenfeldern 20, 25, der Kurznachricht 5 vorliegen. Mit der Auswahlnachricht "Get MMK (x)" kann nun das x-te Datenfeld 15, 20, 25 vom Netzbetreiber 70 angefordert werden, wobei x=1,2 oder 3 ist. So werden nach dem Senden der Auswahlnachricht "get MMK (2)" dem ersten Teilnehmer 60 vom Netzbetreiber 70 die Audiodaten des zweiten Datenfeldes 20 zugesandt. Mehrere Datenfelder lassen sich durch eine Auswahlnachricht "get MMK (x, y, ...)" vom Netzbetreiber anfordern.

Es kann weiterhin vorgesehen sein, daß der Netzbetreiber 70 nach Empfang einer wie beschrieben aufgebauten Kurznachricht 5 vom zweiten Teilnehmer 65 eine Quittierungsnachricht zur Quittierung des Empfangs der Kurznachricht 5 erzeugt und für den zweiten Teilnehmer 65 an das Telekommunikationsnetz 10 gemäß dem ersten Ausführungsbeispiel nach Figur 1 absetzt. Die Quittierungsnachricht kann dabei ebenfalls die Form einer wie beschrieben aufgebauten Kurznachricht haben, wobei eine Mitteilung an den Sender in Abhängigkeit der Quittierungsnachricht gesendet wird und mit der Mitteilung Daten zum Sender übertragen werden, die Informationen über den Aufbau und/oder den Inhalt der Quittierungsnachricht umfassen. Wie bei der beschriebenen Befehlsnachricht kann es dabei vorgesehen sein, daß die Quittierungsnachricht als SMS-Nachricht gemäß dem GSM-Standard und die Mitteilung als erste Kopfinformation 90 und gegebenfalls als zweite Kopfinformation 95 für den zweiten Teilnehmer 65 an das Telekommunikationsnetz 10 abgesetzt werden.

Ist nur die erste Kopfinformation 90 in der Mitteilung vorgesehen, so kann beispielsweise beim zweiten Teilnehmer 65 lediglich eine Anzeige der Quittierungsnachricht an einer Anzeigevorrichtung der Teilnehmerstation des zweiten Teilnehmers 65 als Auswertung beziehungsweise Verarbeitung der Quittierungsnachricht vorgegeben sein.

Bei Vorhandensein der zweiten Kopfinformation 95 in der Mitteilung für die Quittierungsnachricht kann eine vom Netzbetreiber 70 gewünschte Verarbeitung der Quittierungsnachricht auch bereits vorgegeben sein, so daß sie beim zweiten Teilnehmer 65 automatisch eingeleitet wird.

In analoger Weise kann auch eine Quittierungsnachricht vom Netzbetreiber 70 für den ersten Teilnehmer 60 an das Telekommunikationsnetz 10 abgegeben werden, mit der der Netzbetreiber 70 den Empfang einer Befehlsnachricht quittieren kann.

Ebenso kann in entsprechender Weise auch eine Quittierungsnachricht vom ersten Teilnehmer 60 für den Netzbetreiber 70 an das Telekommunikationsnetz 10 abgegeben werden, mit der der erste Teilnehmer 60 den Empfang einer Mitteilung quittieren kann.

Es kann auch vorgesehen sein, die Auswertung der Informationen über den Aufbau und/oder den Inhalt der Kurznachricht 5 und/oder die Erstellung von Befehlsnachrichten zumindest teilweise in einer von der Teilnehmerstation des ersten Teilnehmers 60 abgesetzten externen Einheit, beispielsweise einem Personal Computer, durchzuführen und auch die Anzeigevorrichtung zur Darstellung der Informationen über den Aufbau und/oder den Inhalt der Kurznachricht 5 bei der externen Einheit, insbesondere in Form eines Monitors, vorzusehen.

## Patentansprüche

1. Verfahren zur Übertragung von Kurznachrichten (5) in einem Telekommunikationsnetz (10), insbesondere in einem Funktelekommunikationsnetz, wobei eine Mitteilung an einen Teilnehmer (60) des Telekommunikationsnetzes (10) in Abhängigkeit einer für den Teilnehmer (60) an das Telekommunikationsnetz (10) abgesetzten Kurznachricht (5) gesendet wird, wobei mit der Mitteilung Daten zum Teilnehmer (60) übertragen werden, die Informationen über den Aufbau und/oder den Inhalt der Kurznachricht (5) umfassen, wobei anschließend der Teilnehmer (60) eine Befehlsnachricht über das Telekommunikationsnetz (10) sendet, in der mindestens eines der Datenfelder der Kurznachricht (5) angefordert bzw. zur Löschung freigegeben wird oder die Datenfelder der Kurznachricht (5) angegeben sind, die weitergeleitet werden sollen, **dadurch gekennzeichnet, dass** die Mitteilung eine erste Kopfinformation (90) umfasst, dass die Mitteilung eine zweite Kopfinformation (95) umfasst, dass die erste Kopfinformation (90) eine Information über das Vorhandensein der zweiten Kopfinformation und die zweite Kopfinformation (95) mindestens eine Information über die Art der durchzuführenden Auswertung der Mitteilung umfasst.

2. Verfahren nach Anspruch 1, **dadurch gekennzeichnet, dass** vor der Mitteilung eine Nachricht an den Teilnehmer (60) gesendet wird, die Informationen über das Vorhandensein der an das Telekommunikationsnetz (10) abgesetzten Kurznachricht (5) umfasst.

3. Verfahren nach Anspruch 1 oder 2, **dadurch gekennzeichnet, dass** die Mitteilung nur nach einem vom Teilnehmer (60) an das Telekommunikationsnetz (10) abgegebenen Aufforderungssignal zum Teilnehmer (60) übertragen wird.

4. Verfahren nach Anspruch 1, 2 oder 3, **dadurch gekennzeichnet, dass** als Mitteilung ein erstes Datenfeld (15) der Kurznachricht (5), das die Daten mit den Informationen über den Aufbau und/oder den Inhalt der Kurznachricht (5) umfasst, zum Teilnehmer (60) übertragen wird.

5. Verfahren nach Anspruch 4, **dadurch gekennzeichnet, dass** das erste Datenfeld (15) der Kurznachricht (5) textbasiert ist.

6. Verfahren nach einem der vorherigen Ansprüche, **dadurch gekennzeichnet, dass** mit den Informationen über den Aufbau der Kurznachricht (5) Angaben über die Anzahl von Datenfeldern (15, 20, 25, 30) der Kurznachricht (5) und/oder über die Datenformate in den Datenfeldern (15, 20, 25, 30) und/oder über die Größe der Datenfelder (15, 20, 25, 30) zum Teilnehmer (60) übertragen werden.

7. Verfahren nach einem der vorherigen Ansprüche, **dadurch gekennzeichnet, dass** mit den Informationen über den Inhalt der Kurznachricht (5) Angaben über das Vorhandensein verschiedener Datenarten in der Kurznachricht (5), insbesondere in verschiedenen Datenfeldern (15, 20, 25, 30) der Kurznachricht (5), zum Teilnehmer (60) übertragen werden.

8. Verfahren nach einem der vorherigen Ansprüche, **dadurch gekennzeichnet, dass** mit den Informationen über den Aufbau und/oder den Inhalt der Kurznachricht (5) Angaben über den Absender der in der Kurznachricht (5) gespeicherten Daten zum Teilnehmer (60) übertragen werden.

9. Verfahren nach einem der vorherigen Ansprüche, **dadurch gekennzeichnet, dass** die Informationen über den Aufbau und/oder den Inhalt der Kurznachricht (5) beim Teilnehmer (60) aus der empfangenen Mitteilung ausgelesen und an einer Anzeigevorrichtung dargestellt werden.

10. Verfahren nach Anspruch 9, **dadurch gekennzeichnet, dass** die Informationen über den Aufbau und/oder den Inhalt der Kurznachricht (5) menügesteuert an der Anzeigevorrichtung dargestellt werden, wobei entsprechende Menüstrukturen in Abhängigkeit der ausgelesenen Informationen über den Aufbau und/oder den Inhalt der Kurznachricht beim Teilnehmer (60) erzeugt werden.

11. Verfahren nach Anspruch 9 oder 10, **dadurch gekennzeichnet, dass** die Informationen über den Aufbau und/oder den Inhalt der Kurznachricht (5) mittels einer Verzeichnisstruktur an der Anzeigevorrichtung dargestellt werden, aus der zumindest ein Teil der Kurznachricht (5) zu einer Verarbeitung auswählbar ist.

12. Verfahren nach einem der vorherigen Ansprüche, **dadurch gekennzeichnet, dass** die Informationen über den Aufbau und/oder den Inhalt der Kurznachricht (5) direkt in einer Teilnehmerstation des Teilnehmers (60) verarbeitet werden.

13. Verfahren nach einem der vorherigen Ansprüche, **dadurch gekennzeichnet, dass** die Informationen über den Aufbau und/oder den Inhalt der Kurznachricht (5) zur Verarbeitung an ein ldentifikationsmodul des Teilnehmers (60), insbesondere bezüglich eines Netzbetreibers oder Diensteanbieters, übertragen werden.

14. Verfahren nach einem der vorherigen Ansprüche, **dadurch gekennzeichnet, dass** mit der Mitteilung eine erste Kopfinformation und eine Nachricht zum Teilnehmer (60) übertragen werden, wobei die erste Kopfinformation zumindest eine Information über den Inhalt der Nachricht und die Nachricht die Informationen über den Aufbau und/oder den Inhalt der Kurznachricht (5) umfasst.

15. Verfahren nach Anspruch 14, **dadurch gekennzeichnet, dass** mit der Nachricht eine zweite Kopfinformation und Nutzdaten zum Teilnehmer (60) übertragen werden, wobei die erste Kopfinformation eine Information über das Vorhandensein der zweiten Kopfinformation und die zweite Kopfinformation mindestens eine Information über die Art der durchzuführenden Auswertung der Mitteilung umfasst.

16. Verfahren nach einem der vorherigen Ansprüche, **dadurch gekennzeichnet, dass** als Kurznachricht (5) eine Nachricht eines elektronischen Postdienstes, insbesondere eine Internet E-Mail Nachricht, an das Telekommunikationsnetz (10) abgesetzt wird.

17. Verfahren nach einem der vorherigen Ansprüche, **dadurch gekennzeichnet, dass** die Mitteilung als SMS-Nachricht (Short Message Service) gemäß dem GSM-Standard (Global System for Mobile Communications) an den Teilnehmer (60) übertragen wird.

18. Verfahren nach einem der vorherigen Ansprüche, **dadurch gekennzeichnet, dass** die Kurznachricht (5) von einem Sender, insbesondere von einer mobilen Sendestation, für eine Zentralstation, insbesondere eines Netzbetreibers (70), an das Telekommunikationsnetz (10) abgesetzt wird.

19. Verfahren nach Anspruch 16, **dadurch gekennzeichnet, dass** von der Zentralstation eine Quittierungsnachricht für den Sender an das Telekommunikationsnetz (10) abgesetzt wird, wenn die Kurznachricht (5) von der Zentralstation empfangen wurde.

20. Verfahren nach Anspruch 17, **dadurch gekennzeichnet, dass** die Quittierungsnachricht in Form einer Kurznachricht (5) für den Sender an das Telekommunikationsnetz (10) abgesetzt wird, wobei eine Mitteilung an den Sender in Abhängigkeit der Quittierungsnachricht gesendet wird und mit der Mitteilung Daten zum Sender übertragen werden, die Informationen über den Aufbau und/oder den Inhalt der Quittierungsnachricht umfassen.

21. Verfahren nach Anspruch 17 oder 18, **dadurch gekennzeichnet, dass** die Quittierungsnachricht als SMS-Nachricht gemäß dem GSM-Standard und die Mitteilung als erste Kopfinformation und/oder zweite Kopfinformation für den Sender an das Telekommunikationsnetz (10) abgesetzt werden.

22. Verfahren nach einem der Vorherigen Ansprüche, **dadurch gekennzeichnet, dass** die Kurznachricht (5) von einer Zentralstation, insbesondere eines Netzbetreibers (70), für einen Empfänger, insbesondere einen mobilen Empfänger, an das Telekommunikationsnetz (10) abgesetzt wird.

23. Verfahren nach einem der vorherigen Ansprüche, **dadurch gekennzeichnet, dass** vom Teilnehmer (60) mittels einer an das Telekommunikationsnetz (10) abgesetzten Befehlsnachricht mindestens ein Datenfeld (15, 20, 25, 30) der Kurznachricht (5) in Abhängigkeit des Inhalts der Befehlsnachricht verarbeitet wird.

24. Verfahren nach Anspruch 21, **dadurch gekennzeichnet, dass** die Befehlsnachricht beim Teilnehmer (60) in Abhängigkeit mindestens einer Benutzereingabe an einer Eingabeeinheit erstellt wird.

25. Verfahren nach Anspruch 21 oder 22, **dadurch gekennzeichnet, dass** die Befehlsnachricht beim Teilnehmer (60) in Abhängigkeit der Informationen über den Aufbau und/oder den Inhalt der Kurznachricht (5) automatisch erstellt wird.

26. Verfahren nach Anspruch 21, 22 oder 23, **dadurch gekennzeichnet, dass** die Befehlsnachricht in Abhängigkeit des Leistungsumfangs einer dem Teilnehmer (60) zugeordneten Teilnehmerstation und/oder in Abhängigkeit von vom Teilnehmer (60) vorgegebenen Befehlskriterien erstellt wird.

27. Verfahren nach einem der Ansprüche 21 bis 24, **dadurch gekennzeichnet, dass** vom Teilnehmer (60) mittels einer an das Telekommunikationsnetz (10) abgesetzten als Auswahlnachricht ausgebildeten Befehlsnachricht mindestens ein Datenfeld (15, 20, 25, 30) der Kurznachricht (5) vom Telekommunikationsnetz (10) angefordert wird und dass das mindestens eine angeforderte Datenfeld (15, 20, 25, 30) der Kurznachricht (5) zum Teilnehmer (60) übertragen wird.

28. Verfahren nach Anspruch 25, **dadurch gekennzeichnet, dass** mindestens zwei vom Teilnehmer (60) durch Auswahlnachricht angeforderte Datenfelder (15, 20, 25, 30) der Kurznachricht (5) gemeinsam zum Teilnehmer (60) übertragen werden.

29. Verfahren nach Anspruch 25 oder 26, **dadurch gekennzeichnet, dass** mindestens zwei vom Teilnehmer (60) durch Auswahlnachricht angeforderte Datenfelder (15, 20, 25, 30) der Kurznachricht (5) zeitlich getrennt zum Teilnehmer (60) übertragen werden.

30. Verfahren nach einem der Ansprüche 21 bis 27, **dadurch gekennzeichnet, dass** vom Teilnehmer (60) eine als Löschungsnachricht ausgebildete Befehlsnachricht an das Telekommunikationsnetz (10) abgesetzt wird und dass in Abhängigkeit der Löschungsnachricht mindestens ein Datenfeld (15, 20, 25, 30) der Kurznachricht (5) gelöscht wird.

31. Verfahren nach einem der Ansprüche 21 bis 28, **dadurch gekennzeichnet, dass** vom Teilnehmer (60) eine als Weiterleitungsnachricht ausgebildete Befehlsnachricht an das Telekommunikationsnetz (10) abgesetzt wird und dass in Abhängigkeit der Weiterleitungsnachricht mindestens ein Datenfeld (15, 20, 25, 30) der Kurznachricht (5) an einen weiteren Teilnehmer, insbesondere des Telekommunikationsnetzes (10), weitergeleitet wird.

32. Verfahren nach einem der Ansprüche 21 bis 29, **dadurch gekennzeichnet, dass** die Befehlsnachricht in Form einer Kurznachricht (5) für eine Zentralstation, insbesondere eines Netzbetreibers (70), an das Telekommunikationsnetz (10) abgesetzt wird, wobei eine Mitteilung an die Zentralstation in Abhängigkeit der Befehlsnachricht gesendet wird und mit der Mitteilung Daten zur Zentralstation übertragen werden, die Informationen über den Aufbau und/oder den Inhalt der Befehlsnachricht umfassen.

33. Verfahren nach Anspruch 30, **dadurch gekennzeichnet, dass** die Befehlsnachricht und die Mitteilung direkt in einer Teilnehmerstation des Teilnehmers (60) erstellt werden.

34. Verfahren nach Anspruch 30 oder 31, **dadurch gekennzeichnet, dass** die Befehlsnachricht und die Mitteilung durch ein Identifikationsmodul des Teilnehmers (60), insbesondere bezüglich eines Netzbetreibers oder Diensteanbieters, erstellt werden.

35. Verfahren nach Anspruch 30, 31 oder 32, **dadurch gekennzeichnet, dass** die Befehlsnachricht als SMS-Nachricht gemäß dem GSM-Standard und die Mitteilung als erste Kopfinformation und/oder zweite Kopfinformation für die Zentralstation an das Telekommunikationsnetz (10) abgesetzt werden.

36. Verfahren nach einem der vorherigen Ansprüche, **dadurch gekennzeichnet, dass** die Informationen über den Aufbau und/oder den Inhalt der Kurznachricht (5) aus Angaben über den Aufbau und/oder den Inhalt mindestens zweier Datenfelder (15, 20, 25, 30) der Kurznachricht (5) generiert werden, wobei die Angaben aus diesen Datenfeldern (15, 20, 25, 30) erhalten werden.

## Claims

1. Method for transmitting short messages (5) in a telecommunication network (10), particularly in a radio telecommunication network, wherein a communication is sent to a subscriber (60) in the telecommunication network (10) on the basis of a short message (5) that has been sent to the telecommunication network (10) for the subscriber (60), wherein the communication is accompanied by the transmission, to the subscriber (60), of data that comprise information about the structure and/or the content of the short message (5), wherein the subscriber (60) then sends a command message via the telecommunication network (10), in which at least one of the data fields of the short message (5) is requested or is approved for erasure or the data fields of the short message (5) that are intended to be forwarded are indicated, **characterized in that** the communication comprises a first header information item (90), **in that** the communication comprises a second header information item (95), **in that** the first header information item (90) comprises an information item about the presence of a second header information item and the second header information item (95) comprises at least one information item about the type of evaluation to be performed for the communication.

2. Method according to Claim 1, **characterized in that** prior to the communication a message that comprises information about the presence of the short message (5) that has been sent to the telecommunication network (10) is sent to the subscriber (60).

3. Method according to Claim 1 or 2, **characterized in that** the communication is transmitted to the subscriber (60) only following a request signal that has been submitted to the telecommunication network (10) by the subscriber (60).

4. Method according to Claim 1, 2 or 3, **characterized in that** the communication transmitted to the subscriber (60) is a first data field (15) of the short message (5), which data field comprises the data with the information about the structure and/or the content of the short message (5).

5. Method according to Claim 4, **characterized in that** the first data field (15) of the short message (5) is text-based.

6. Method according to one of the preceding claims, **characterized in that** the information about the structure of the short message (5) is accompanied by the transmission, to the subscriber (60), of details about the number of data fields (15, 20, 25, 30) in a short message (5) and/or about the data formats in the data fields (15, 20, 25, 30) and/or about the size of the data fields (15, 20, 25, 30).

7. Method according to one of the preceding claims, **characterized in that** the information about the content of the short message (5) is accompanied by the transmission, to the subscriber (60), of details about the presence of different types of data in the short message (5), particularly in different data fields (15, 20, 25, 30) of the short message (5).

8. Method according to one of the preceding claims, **characterized in that** the information about the structure and/or the content of the short message (5) is accompanied by the transmission, to the subscriber (60), of details about the sender of the data stored in the short message (5).

9. Method according to one of the preceding claims, **characterized in that** the information about the structure and/or the content of the short message (5) is read on the subscriber (60) from the received communication and presented on a display apparatus.

10. Method according to Claim 9, **characterized in that** the information about the structure and/or the content of the short message (5) is presented on the display apparatus under menu control, wherein appropriate menu structures are produced on the subscriber (60) on the basis of the read information about the structure and/or the content of the short message.

11. Method according to Claim 9 or 10, **characterized in that** the information about the structure and/or the content of the short message (5) is presented on the display apparatus by means of a directory structure, from which at least a portion of the short message (5) can be selected for processing.

12. Method according to one of the preceding claims, **characterized in that** the information about the structure and/or the content of the short message (5) is processed directly in a subscriber station of the subscriber (60).

13. Method according to one of the preceding claims, **characterized in that** the information about the structure and/or the content of the short message (5) is transmitted for processing to an identification module of the subscriber (60), particularly in respect of a network operator or service provider.

14. Method according to one of the preceding claims, **characterized in that** the communication is accompanied by the transmission, to the subscriber (60), of a first header information item and a message, wherein the first header information item comprises at least one information item about the content of the message and the message comprises the information about the structure and/or the content of the short message (5).

15. Method according to Claim 14, **characterized in that** the message is accompanied by the transmission, to the subscriber (60), of a second header information item and useful data, wherein the first header information item comprises an information item about the presence of the second header information item and the second header information item comprises at least one information item about the type of evaluation to be performed for the communication.

16. Method according to one of the preceding claims, **characterized in that** the short message (5) sent to the telecommunication network (10) is a message from an electronic mail service, particularly an Internet e-mail message.

17. Method according to one of the preceding claims, **characterized in that** the communication is transmitted as an SMS (Short Message Service) message based on the GSM (Global System for Mobile Communications) standard to the subscriber (60).

18. Method according to one of the preceding claims, **characterized in that** the short message (5) is sent from a sender, particularly from a mobile transmission station, for a central station, particularly of a network operator (70), to the telecommunication network (10).

19. Method according to Claim 16, **characterized in that** the central station sends an acknowledgement message for the sender to the telecommunication network (10) when the short message (5) has been received by the central station.

20. Method according to Claim 17, **characterized in that** the acknowledgement message is sent in the form of a short message (5) for the sender to the telecommunication network (10), wherein a communication is sent to the sender on the basis of the acknowledgement message and the communication is accompanied by the transmission, to the sender, of data that comprise information about the structure and/or the content of the acknowledgement message.

21. Method according to Claim 17 or 18, **characterized in that** the acknowledgement message is sent as an SMS message based on the GSM standard, and the communication is sent as a first header information item and/or a second header information item for the sender, to the telecommunication network (10).

22. Method according to one of the preceding claims, **characterized in that** the short message (5) is sent from a central station, particularly of a network operator (70), for a receiver, particularly a mobile receiver, to the telecommunication network (10).

23. Method according to one of the preceding claims, **characterized in that** the subscriber (60) uses a command message sent to the telecommunication network (10) to process at least one data field (15, 20, 25, 30) of the short message (5) on the basis of the content of the command message.

24. Method according to Claim 21, **characterized in that** the command message is created on the subscriber (60) on the basis of at least one user input on an input unit.

25. Method according to Claim 21 or 22, **characterized in that** the command message is created on the subscriber (60) automatically on the basis of the information about the structure and/or the content of the short message (5).

26. Method according to Claim 21, 22 or 23, **characterized in that** the command message is created on the basis of the scope of services of a subscriber station associated with the subscriber (60) and/or on the basis of command criteria prescribed by the subscriber (60).

27. Method according to one of Claims 21 to 24, **characterized in that** the subscriber (60) uses a command message, sent to the telecommunication network (10), in the form of a selection message to request at least one data field (15, 20, 25, 30) of the short message (5) from the telecommunication network (10) and **in that** the at least one requested data field (15, 20, 25, 30) of the short message (5) is transmitted to the subscriber (60).

28. Method according to Claim 25, **characterized in that** at least two data fields (15, 20, 25, 30) of the short message (5) that are requested by the subscriber (60) by selection message are transmitted to the subscriber (60) together.

29. Method according to Claim 25 or 26, **characterized in that** at least two data fields (15, 20, 25, 30) of the short message (5) that are requested by the subscriber (60) by selection message are transmitted to the subscriber (60) at separate times.

30. Method according to one of Claims 21 to 27, **characterized in that** the subscriber (60) sends a command message in the form of an erasure message to the telecommunication network (10) and **in that** the erasure message is taken as a basis for erasing at least one data field (15, 20, 25, 30) of the short message (5).

31. Method according to one of Claims 21 to 28, **characterized in that** the subscriber (60) sends a command message in the form of a forwarding message to the telecommunication network (10) and **in that** the forwarding message is taken as a basis for forwarding at least one data field (15, 20, 25, 30) of the short message (5) to a further subscriber, particularly in the telecommunication network (10).

32. Method according to one of Claims 21 to 29, **characterized in that** the command message is sent in the form of a short message (5) for a central station, particularly of a network operator (70), to the telecommunication network (10), wherein a communication is sent to the central station on the basis of the command message and the communication is accompanied by the transmission, to the central station, of data that comprise information about the structure and/or the content of the command message.

33. Method according to Claim 30, **characterized in that** the command message and the communication are created directly in a subscriber station of the subscriber (60).

34. Method according to Claim 30 or 31, **characterized in that** the command message and the communication are created by an identification module of the subscriber (60), particularly in respect of a network operator or service provider.

35. Method according to Claim 30, 31 or 32, **characterized in that** the command message is sent as an SMS message based on the GSM standard, and the communication is sent as a first header information item and/or a second header information item for the central station, to the telecommunication network (10).

36. Method according to one of the preceding claims, **characterized in that** the information about the structure and/or the content of the short message (5) is generated from details about the structure and/or the content of at least two data fields (15, 20, 25, 30) of the short message (5), wherein the details are obtained from these data fields (15, 20, 25, 30).

## Revendications

1. Procédé de transmission de messages courts (5) dans un réseau de télécommunication (10), notamment un réseau de télécommunication hertzien, un communiqué étant envoyé à un abonné (60) du réseau de télécommunication (10) en fonction d'un message court (5) déposé sur le réseau de télécommunication (10) pour l'abonné (60), des données étant transmises à l'abonné (60) avec le communiqué, lesquelles comprennent des informations sur la structure et/ou le contenu du message court (5), l'abonné (60) envoyant ensuite un message d'instruction par le biais du réseau de télécommunication (10), dans lequel au moins l'un des champs de données du message court (5) est demandé ou libéré en vu d'être effacé, ou dans lequel sont indiqués les champs de données du message court (5) qui doivent être transférés, **caractérisé en ce que** le communiqué comprend une première information d'en-tête (90), **en ce que** le communiqué comprend une deuxième information d'en-tête (95), **en ce que** la première information d'en-tête (90) comprend une information sur la présence de la deuxième information d'en-tête et la deuxième information d'en-tête (95) comprend au moins une information sur la nature de l'interprétation du communiqué à effectuer.

2. Procédé selon la revendication 1, **caractérisé en ce qu'**un message est envoyé à l'abonné (60) avant le communiqué, lequel comprend des informations sur la présence du message court (5) déposé sur le réseau de télécommunication (10).

3. Procédé selon la revendication 1 ou 2, **caractérisé en ce que** le communiqué n'est transmis à l'abonné (60) qu'après un signal de demande déposé par l'abonné (60) sur le réseau de télécommunication (10).

4. Procédé selon la revendication 1, 2 ou 3, **caractérisé en ce que** le communiqué transmis à l'abonné (60) est un premier champ de données (15) du message court (5), lequel comprend les données avec les informations sur la structure et/ou le contenu du message court (5).

5. Procédé selon la revendication 4, **caractérisé en ce que** le premier champ de données (15) du message court (5) est textuel.

6. Procédé selon l'une des revendications précédentes, **caractérisé en ce qu'**avec les informations sur la structure du message court (5) sont transmises à l'abonné (60) des indications sur le nombre de champs de données (15, 20, 25, 30) du message court (5) et/ou sur les formats des données dans les champs de données (15, 20, 25, 30) et/ou sur la taille des champs de données (15, 20, 25, 30).

7. Procédé selon l'une des revendications précédentes, **caractérisé en ce qu'**avec les informations sur le contenu du message court (5) sont transmises à l'abonné (60) des indications sur la présence de différents types de données dans le message court (5), notamment dans différents champs de données (15, 20, 25, 30) du message court (5).

8. Procédé selon l'une des revendications précédentes, **caractérisé en ce qu'**avec les informations sur la structure et/ou le contenu du message court (5) sont transmises à l'abonné (60) des indications sur l'expéditeur des données enregistrées dans le message court (5).

9. Procédé selon l'une des revendications précédentes, **caractérisé en ce que** les informations sur la structure et/ou le contenu du message court (5) sont lues chez l'abonné (60) depuis le communiqué reçu et représentées sur un dispositif d'affichage.

10. Procédé selon la revendication 9, **caractérisé en ce que** les informations sur la structure et/ou le contenu du message court (5) sont représentées sur le dispositif d'affichage de manière contrôlée par menu, des structures de menu correspondantes étant générées chez l'abonné (60) en fonction des informations lues sur la structure et/ou le contenu du message court.

11. Procédé selon la revendication 9 ou 10, **caractérisé en ce que** les informations sur la structure et/ou le contenu du message court (5) sont représentées sur le dispositif d'affichage au moyen d'une structure de répertoires à partir de laquelle au moins une partie du message court (5) peut être sélectionnée en vue d'un traitement.

12. Procédé selon l'une des revendications précédentes, **caractérisé en ce que** les informations sur la structure et/ou le contenu du message court (5) sont traitées directement dans une station d'abonné de l'abonné (60).

13. Procédé selon l'une des revendications précédentes, **caractérisé en ce que** les informations sur la structure et/ou le contenu du message court (5) sont transmises en vue du traitement à un module d'identification de l'abonné (60), notamment concernant un opérateur de réseau ou un fournisseur de services.

14. Procédé selon l'une des revendications précédentes, **caractérisé en ce qu'**une première information d'en-tête et un message sont transmis à l'abonné (60) avec le communiqué, la première information d'en-tête comprenant au moins une information sur le contenu du message et le message comprenant les informations sur la structure et/ou le contenu du message court (5).

15. Procédé selon la revendication 14, **caractérisé en ce qu'**une deuxième information d'en-tête et des données utiles sont transmises à l'abonné (60) avec le message, la première information d'en-tête comprenant une information sur la présence de la deuxième information d'en-tête et la deuxième information d'entête comprenant au moins une information sur la nature de l'interprétation du communiqué à effectuer.

16. Procédé selon l'une des revendications précédentes, **caractérisé en ce que** le message court (5) déposé sur le réseau de télécommunication (10) est un message d'un service de courrier électronique, notamment un message du courrier électronique de l'Internet.

17. Procédé selon l'une des revendications précédentes, **caractérisé en ce que** le communiqué est transmis à l'abonné (60) sous la forme d'un message SMS (Short Message Service - Service de message court) selon la norme GSM (Global System for Mobile Communications - Système mondial de communications mobiles).

18. Procédé selon l'une des revendications précédentes, **caractérisé en ce que** le message court (5) est déposé sur le réseau de télécommunication (10) par un émetteur, notamment par une station d'émission mobile, pour une station centrale, notamment d'un opérateur de réseau (70).

19. Procédé selon la revendication 16, **caractérisé en ce qu'**un message d'acquittement pour l'émetteur est déposé sur le réseau de télécommunication (10) par la station centrale lorsque le message court (5) a été reçu par la station centrale.

20. Procédé selon la revendication 17, **caractérisé en ce que** le message d'acquittement est déposé sur le réseau de télécommunication (10) sous la forme d'un message court (5) pour l'émetteur, un communiqué étant envoyé à l'émetteur en fonction du message d'acquittement et des données étant transmises avec le communiqué, lesquelles comprennent des informations sur la structure et/ou le contenu du message d'acquittement.

21. Procédé selon la revendication 17 ou 18, **caractérisé en ce que** le message d'acquittement est déposé sur le réseau de télécommunication (10) sous la forme d'un message SMS selon la norme GSM et le communiqué sous la forme d'une première information d'en-tête et/ou d'une deuxième information d'en-tête pour l'émetteur.

22. Procédé selon l'une des revendications précédentes, **caractérisé en ce que** le message court (5) est déposé sur le réseau de télécommunication (10) par une station centrale, notamment d'un opérateur de réseau (70), pour un destinataire, notamment un destinataire mobile.

23. Procédé selon l'une des revendications précédentes, **caractérisé en ce qu'**au moins un champ de données (15, 20, 25, 30) du message court (5) est traité par l'abonné (60) au moyen d'un message d'instruction déposé sur le réseau de télécommunication (10) en fonction du contenu du message d'instruction.

24. Procédé selon la revendication 21, **caractérisé en ce que** le message d'instruction est créé chez l'abonné (60) en fonction d'au moins une saisie d'utilisateur sur une unité de saisie.

25. Procédé selon la revendication 21 ou 22, **caractérisé en ce que** le message d'instruction est créé automatiquement chez l'abonné (60) en fonction des informations sur la structure et/ou le contenu du message court (5).

26. Procédé selon la revendication 21, 22 ou 23, **caractérisé en ce que** le message d'instruction est créé en fonction du niveau de performances d'une station d'abonné associée à l'abonné (60) et/ou en fonction de critères d'instruction prédéfinis par l'abonné (60).

27. Procédé selon l'une des revendications 21 à 24, **caractérisé en ce qu'**au moins un champ de données (15, 20, 25, 30) du message court (5) est demandé au réseau de télécommunication (10) par l'abonné (60) au moyen d'un message d'instruction déposé sur le réseau de télécommunication (10) et configuré sous la forme d'un message de sélection, et **en ce que** l'au moins un champ de données (15, 20, 25, 30) demandé du message court (5) est transmis à l'abonné (60).

28. Procédé selon la revendication 25, **caractérisé en ce qu'**au moins deux champs de données (15, 20, 25, 30) du message court (5) demandés par l'abonné (60) par le biais du message de sélection sont transmis ensemble à l'abonné (60).

29. Procédé selon la revendication 25 ou 26, **caractérisé en ce qu'**au moins deux champs de données (15, 20, 25, 30) du message court (5) demandés par l'abonné (60) par le biais du message de sélection sont transmis à l'abonné (60) séparément dans le temps.

30. Procédé selon l'une des revendications 21 à 27, **caractérisé en ce qu'**un message d'instruction configuré sous la forme d'un message d'effacement est déposé par l'abonné (60) sur le réseau de télécommunication (10) et **en ce qu'**au moins un champ de données (15, 20, 25, 30) du message court (5) est effacé en fonction du message d'effacement.

31. Procédé selon l'une des revendications 21 à 28, **caractérisé en ce qu'**un message d'instruction configuré sous la forme d'un message de transfert est déposé par l'abonné (60) sur le réseau de télécommunication (10) et **en ce qu'**au moins un champ de données (15, 20, 25, 30) du message court (5) est transféré à un autre abonné, notamment du réseau de télécommunication (10), en fonction du message de transfert.

32. Procédé selon l'une des revendications 21 à 29, **caractérisé en ce que** le message d'instruction est déposé sur le réseau de télécommunication (10) sous la forme d'un message court (5) pour une station centrale, notamment d'un opérateur de réseau (70), un communiqué étant envoyé à la station centrale en fonction du message d'instruction et des données étant transmises à la station centrale avec le communiqué, lesquelles comprennent des informations sur la structure et/ou le contenu du message d'instruction.

33. Procédé selon la revendication 30, **caractérisé en ce que** le message d'instruction et le communiqué sont créés directement dans une station d'abonné de l'abonné (60).

34. Procédé selon la revendication 30 ou 31, **caractérisé en ce que** le message d'instruction et le communiqué sont créés par un module d'identification de l'abonné (60), notamment concernant un opérateur de réseau ou un fournisseur de services.

35. Procédé selon la revendication 30, 31 ou 32, **caractérisé en ce que** le message d'instruction est déposé sur le réseau de télécommunication (10) sous la forme d'un message SMS selon la norme GSM et le communiqué sous la forme d'une première information d'en-tête et/ou d'une deuxième information d'en-tête pour la station centrale.

36. Procédé selon l'une des revendications précédentes, **caractérisé en ce que** les informations sur la structure et/ou le contenu du message court (5) sont générées à partir d'indications sur la structure et/ou le contenu d'au moins deux champs de données (15, 20, 25, 30) du message court (5), les indications étant obtenues à partir de ces champs de données (15, 20, 25, 30).
